**Europäisches Patentamt**

**European Patent Office**

**Office européen des brevets**

(19)

(11) Numéro de publication : **0 015 204 B1**

(12) **FASCICULE DE BREVET EUROPÉEN**

(45) Date de publication du fascicule du brevet :
25.07.84

(21) Numéro de dépôt : 80400226.9

(22) Date de dépôt : 18.02.80

(51) Int. Cl.³ : **F 16 F 15/12, F 16 D 13/68**

(54) **Dispositif amortisseur de torsion, en particulier friction d'embrayage, notamment pour véhicule automobile.**

(30) Priorité : 23.02.79 FR 7904719

(43) Date de publication de la demande :
03.09.80 Bulletin 80/18

(45) Mention de la délivrance du brevet :
25.07.84 Bulletin 84/30

(84) Etats contractants désignés :
**DE FR GB IT NL SE**

(56) Documents cités :
**FR-A- 1 113 600**
**FR-A- 1 185 946**
**FR-A- 2 197 433**
**FR-A- 2 242 606**
**FR-A- 2 268 994**
**FR-A- 2 270 491**
**FR-A- 2 282 577**
**US-A- 3 296 887**
**US-A- 3 811 545**
**US-E-    27 996**

(73) Titulaire : **VALEO**
**64 Avenue de la Grande Armée**
**F-75017 Paris (FR)**

(72) Inventeur : **Loizeau, Pierre**
**1 Allée de l'Albain**
**F-92140 Ville d'Avray (FR)**

(74) Mandataire : **CABINET BONNET-THIRION**
**95 Boulevard Beaumarchais**
**F-75003 Paris (FR)**

Jouve, 18, rue St-Denis, 75001 Paris, France

**Description**

La présente invention concerne d'une manière générale les dispositifs amortisseurs de torsion qui comportent au moins deux parties coaxiales montées rotatives l'une par rapport à l'autre, dans les limites d'un débattement angulaire déterminé, et à l'encontre d'organes élastiques aptes à agir circonférentiellement entre elles, dits ci-après organes élastiques à action circonférentielle, pour une plage au moins dudit débattement angulaire.

En pratique, chacune des parties en question comporte une pièce annulaire, parallèlement l'une à l'autre, et les organes élastiques prévus entre elles sont chacun individuellement logés pour partie dans une fenêtre de la pièce annulaire de l'une desdites parties, et pour partie dans une fenêtre de la pièce annulaire de l'autre de celles-ci.

Ainsi qu'on le sait, un tel dispositif amortisseur de torsion entre usuellement dans la constitution d'une friction d'embrayage, notamment pour véhicule automobile, l'une de ses parties rotatives portant alors un disque de friction, destiné à être solidarisé en rotation avec un premier arbre, en pratique un arbre menant, l'arbre de sortie d'un moteur, tandis qu'une autre desdites parties rotatives est portée par un moyeu destiné à être solidarisé en rotation avec un deuxième arbre, en pratique un arbre mené, l'arbre d'entrée d'une boîte de vitesses.

Un tel dispositif permet en effet d'assurer une transmission régulée du couple de rotation appliqué à l'une de ses parties rotatives lorsque l'autre est elle-même l'objet d'un couple de rotation, c'est-à-dire de filtrer les vibrations susceptibles de prendre naissance tout au long de la chaîne cinématique, allant du moteur aux arbres de roue commandés, sur laquelle il est inséré.

Ainsi qu'on le sait également, il est avantageux, au moins pour certaines applications, et notamment pour celle relative aux frictions d'embrayage pour véhicules automobiles, que, pour les faibles valeurs du débattement angulaire entre les deux parties rotatives constitutives d'un tel dispositif amortisseur de torsion, le couple transmis entre celles-ci reste faible.

En effet, cette disposition, qui implique la mise en œuvre d'organes élastiques à action circonférentielle de faible raideur pour les faibles valeurs de couple, permet notamment d'éliminer les bruits de boîte de vitesses au point mort, à l'arrêt du véhicule concerné, dits ci-après bruits de point mort, notamment à chaud.

Et il apparaît que, au moins dans une certaine mesure, il est souhaitable, de ce seul point de vue, que la plage de débattement angulaire au cours de laquelle interviennent ainsi ces organes élastiques de faible raideur soit aussi étendue que possible.

En pratique, pour que les organes élastiques de faible raideur soient effectivement les seuls à intervenir pour les faibles valeurs de couple, les fenêtres des pièces annulaires des deux parties coaxiales constitutives du dispositif amortisseur de torsion concerné ont un même développement circonférentiel d'une de ces parties à l'autre, tandis que, pour les autres organes élastiques interposés entre celles-ci, qui ont une raideur plus forte, les fenêtres de la pièce annulaire de la partie menante dans lesquelles sont logés ces organes élastiques ont un développement circonférentiel différent de celui des fenêtres correspondantes de la pièce annulaire de la partie menée.

Ainsi, dès que, une vitesse étant enclenchée, une action est exercée sur l'accélérateur du véhicule concerné, en vue d'un fonctionnement « en tirage » de l'ensemble, les organes élastiques de forte raideur n'interviennent qu'après que le jeu circonférentiel entre les bords correspondants des fenêtres dans lesquelles ils sont logés, de la partie menante à la partie menée, ait été rattrapé.

De même, lorsque, l'action sur l'accélérateur étant suspendue, le couple entre les deux parties rotatives constitutives du dispositif amortisseur de torsion concerné change de sens, le fonctionnement de l'ensemble devenant alors du type dit « en rétro », les organes élastiques de forte raideur, préalablement comprimés entre partie menante et partie menée, se détendent, jusqu'à ce que, retrouvant un appui à chacune de leurs extrémités sur les bords des fenêtres de la partie menée dans lesquelles ils sont logés pour la configuration de repos de l'ensemble, qui sont celles de plus petit développement circonférentiel, ils laissent à nouveau seuls à intervenir les organes élastiques de faible raideur, puis se recompriment, et vice versa, lorsque de nouveau une action est exercée sur l'accélérateur.

En pratique, lorsque l'action sur l'accélérateur est suspendue, le changement de sens du couple est quasi instantané.

Or, que ce soit dans un sens ou dans l'autre, les organes élastiques de faible raideur, qui interviennent à chaque fois pour les faibles valeurs de couple, sont très rapidement saturés.

Il en résulte donc, lorsque l'action sur l'accélérateur est suspendue ou est à nouveau exercée, un basculement instantané et bruyant de l'une des deux parties constitutives du disque amortisseur de torsion concerné par rapport à l'autre, ce basculement correspondant au rattrapage de jeu à faire entre lesdites parties dû à une saturation, d'abord dans un sens, puis dans l'autre, des organes élastiques de faible raideur intervenant entre elles.

Le bruit dont s'accompagne ce basculement est, en pratique, d'autant plus intense que, d'une part, la plage de débattement angulaire entre les deux parties rotatives en question correspondant aux organes élastiques de faible raideur est importante, et que, d'autre part, le rapport de vitesse engagé est court.

Ainsi, deux exigences contradictoires sont à concilier, l'une relative à la mise en œuvre d'une plage de débattement angulaire dans laquelle n'interviennent, aux valeurs de couple faibles, que des organes élastiques à action circonférentielle de faible raideur, pour une bonne absorption des bruits de point mort, notamment pour les véhicules à moteur diesel, dont le régime de ralenti est particulièrement bas et les accélérations cycliques particulièrement importantes, l'autre relative au rattrapage de jeu angulaire usuellement lié à une telle plage lors du passage d'un fonctionnement « en tirage », accélérateur enfoncé, à un fonctionnement « en rétro », accélérateur relâché, et vice versa, un tel rattrapage de jeu angulaire étant lui aussi générateur de bruit, et celui-ci étant d'autant plus important que ladite plage est elle-même plus étendue.

La présente invention a d'une manière générale pour objet une disposition permettant de surmonter cette difficulté.

De manière plus précise, elle a notamment pour objet un dispositif amortisseur de torsion, en particulier friction d'embrayage, du genre comportant au moins deux parties coaxiales montées rotatives l'une par rapport à l'autre, dans les limites d'un débattement angulaire déterminé, et à l'encontre d'organes élastiques aptes à agir circonférentiellement entre elles pour une plage au moins dudit débattement angulaire connu en soi du FR-A-2 197 433, et au moins un organe qui est sensible à la force centrifuge, à l'encontre de moyens de rappel, et qui est ainsi mobile de manière réversible entre une position d'attente, et une position de service, afin de modifier le mode d'opération du dispositif, ledit organe étant connu en soi du US-E-27 996, caractérisé en ce que ledit organe sensible à la force centrifuge constitue un organe d'interposition, en ce que, en position d'attente, ledit organe d'interposition est sans effet, et en ce que, en position de service, au-delà d'une vitesse de rotation déterminée liée à ses moyens de rappel, prenant circonférentiellement appui soit directement, soit indirectement sur l'une quelconque desdites parties, il est apte à fournir un appui circonférentiel à l'un au moins desdits organes élastiques, en sorte que, les organes élastiques de faible raideur étant empêchés d'intervenir seuls aux faibles valeurs de couple, les caractéristiques de fonctionnement du dispositif s'en trouvent modifiées.

Il est certes déjà connu d'associer à un embrayage un quelconque organe sensible à la force centrifuge.

Cette disposition se trouve par exemple décrite dans FR-A-1 113 600 et FR-A-1 185 946.

Mais, dans l'un et l'autre de ces brevets, l'organe sensible à la force centrifuge coopère avec un élément extérieur à la friction d'embrayage, en agissant par exemple entre le moyeu de celle-ci et l'un des plateaux entre lesquels est disposé son disque de friction, en pratique le plateau de réaction, ou volant, de l'embrayage.

Suivant l'invention, un tel organe centrifuge intervient au sein même du dispositif amortisseur de torsion ou friction d'embrayage concerné, en coopérant avec deux éléments appartenant l'un et l'autre à ce dispositif amortisseur de torsion.

Suivant une première forme de réalisation possible de l'invention, l'organe d'interposition suivant l'invention est porté par l'une des parties coaxiales rotatives constitutives du dispositif amortisseur de torsion concerné, et il est apte à fournir par lui-même, en position de service, un appui circonférentiel à l'un au moins des organes élastiques interposés entre lesdites parties.

En variante, suivant une autre forme de réalisation possible de l'invention, il est associé à l'organe d'interposition suivant l'invention, d'une part, un organe d'appui, qui s'étend axialement, et avec lequel, en position de service, il est apte à venir en appui circonférentiel positif, et d'autre part une plaque annulaire, qui est engagée par des évidements, tels que fenêtres ou échancrures, sur les organes élastiques prévus entre les parties coaxiales rotatives constitutives du dispositif amortisseur de torsion concerné, sans jeu circonférentiel pour celui au moins des dits organes élastiques qui est concerné, c'est-à-dire celui avec lequel doit coopérer l'organe d'interposition, et avec un jeu circonférentiel pour les autres organes élastiques, et qui forme une pièce portant l'un quelconque desdits organes d'interposition et d'appui tandis que l'autre est solidaire d'une pièce appartenant à l'une quelconque desdites parties, en sorte que, dans ce cas, c'est par l'intermédiaire de ladite plaque annulaire que l'organe d'interposition est apte à fournir un appui circonférentiel au moins audit organe élastique concerné.

Quoi qu'il en soit, au point mort, véhicule à l'arrêt, le dispositif amortisseur de torsion concerné ne tourne qu'à vitesse réduite, et l'organe d'interposition sensible à la force centrifuge qu'il comporte suivant l'invention est alors sans action : les organes élastiques à action circonférentielle de faible raideur et de forte raideur prévus entre les deux parties rotatives constitutives de ce dispositif interviennent alors tous librement entre celles-ci, pour toute la plage de débattement angulaire qui leur est allouée, quelle que soit l'étendue de cette plage.

Par contre, lorsque, véhicule en déplacement, ce dispositif amortisseur de torsion tourne à vitesse suffisante, l'organe d'interposition suivant l'invention passe de lui-même, sous les effets de la force centrifuge, de sa position d'attente précédente, dite ici par commodité position rétractée d'attente, à sa position de service, dite ici par commodité position déployée de service, et, pour celle-ci, un appui circonférentiel est rendu disponible pour l'organe élastique concerné, qui est en pratique un organe élastique de forte raideur, en sorte que le déploiement de détente de celui-ci est interrompu.

Tout se passe comme si la géométrie spécifique du dispositif amortisseur de torsion concerné, liée au jeu circonférentiel, de partie menante à partie menée, entre les fenêtres dans lesquelles sont logés les organes élastiques, se trouvait, pour l'un au moins de ceux-ci, modifiée.

Autrement dit, tout se passe comme si, pour l'organe élastique concerné, le développement circonférentiel de la fenêtre de la pièce annulaire de l'une des deux parties coaxiales rotatives dans laquelle il est pour partie logé était susceptible de prendre l'une quelconque de deux valeurs, l'une lorsque l'organe d'interposition suivant l'invention est en position rétractée d'attente, l'autre lorsque l'organe d'interposition est en position déployée de service.

A cet égard, la présente invention a encore pour objet un dispositif amortisseur de torsion, en particulier friction d'embrayage, du genre comportant au moins deux parties coaxiales montées rotatives l'une par rapport à l'autre, dans les limites d'un débattement angulaire déterminé, et à l'encontre d'organes élastiques aptes à agir circonférentiellement entre elles pour une plage au moins dudit débattement angulaire, chacune desdites parties comportant une pièce annulaire, parallèlement l'une à l'autre, et lesdits organes élastiques étant chacun individuellement logés pour partie dans une fenêtre de la pièce annulaire de l'une desdites parties et pour partie dans une fenêtre de la pièce annulaire de l'autre desdites parties. Un tel dispositif connu du FR-A-2 197 433 est caractérisé en ce qu'il comporte au moins un organe, dit ci-après par commodité organe d'interposition, qui est sensible à la force centrifuge, à l'encontre de moyens de rappel, et qui est ainsi mobile de manière réversible entre une position d'attente, pour laquelle il est sans effet, et, au-delà d'une vitesse de rotation déterminée liée à ses moyens de rappel, une position de service pour laquelle, pour l'un au moins desdits organes élastiques, il se substitue, soit directement, soit indirectement, à l'un des bords radiaux d'une des fenêtres dans lesquelles est logé ledit organe élastique.

Il est clair, de ce qui précède, que, suivant la position de l'organe d'interposition suivant l'invention, et donc suivant la vitesse de rotation du dispositif amortisseur de torsion concerné, les caractéristiques de fonctionnement de celui-ci sont différentes.

En effet, lorsque l'organe d'interposition suivant l'invention est en position déployée de service, l'action des organes élastiques est modifiée, et, en particulier, les organes élastiques de faible raideur sont empêchés d'intervenir seuls aux faibles valeurs de couple.

Ainsi tout bruit est évité lors d'un passage d'un fonctionnement « en tirage » à un fonctionnement « en rétro », et ceci quelle que soit l'étendue de la plage de débattement angulaire dans laquelle interviennent les organes élastiques de faible raideur pour la position de point mort à l'arrêt.

Par suite, cette plage peut être faite aussi étendue qu'il est nécessaire pour une bonne absorption des bruits de point mort.

Dans le brevet US-E-27 996, il est également mis en œuvre un organe sensible à la force centrifuge.

Mais le but en est seulement d'éviter, au-delà d'une certaine vitesse de rotation, l'établissement de vibrations de résonance susceptibles de se révéler destructives, et non pas, comme dans la présente demande, de filtrer les vibrations à toutes les vitesses de rotation.

En outre, cet organe sensible à la force centrifuge est une soupape qui, propre à faire communiquer l'un avec l'autre deux milieux différents, comme toutes les soupapes, intervient au sein d'une seule des parties co-axiales du dispositif en cause, et non pas, comme dans la présente demande, un organe d'interposition apte à intervenir entre de telles parties co-axiales.

Enfin, dans ce brevet US-E-27 996, les deux parties co-axiales concernées sont d'abord bloquées l'une sur l'autre pour les basses vitesses, puis libérées l'une par rapport à l'autre pour les vitesses plus élevées, alors que c'est exactement l'inverse dans le dispositif objet de la présente demande.

De même, dans le brevet US-A-3 811 545, les ressorts interposés entre les deux parties co-axiales concernées sont empêchés, par frottement sensible à la vitesse centrifuge, d'intervenir aux basses vitesses, et ne sont déverrouillés qu'ensuite, en sorte que, ces ressorts ne sauraient être des ressorts de faible raideur du type de ceux intervenant normalement seuls aux faibles couples dans le dispositif objet de la présente demande lorsque l'organe d'interposition suivant l'invention est en position d'attente.

Dans le brevet FR-A-2 197 433, enfin, il n'existe aucun organe d'interposition sensible à la force centrifuge.

C'est au contraire un tel organe d'interposition qui est caractéristique de la présente demande.

Les caractéristiques et avantages de l'invention ressortiront d'ailleurs de la description qui va suivre, à titre d'exemple, en référence aux dessins schématiques annexés sur lesquels :

la figure 1 est une vue partielle en élévation, avec un arrachement local, d'un dispositif amortisseur de torsion suivant l'invention, représenté à l'arrêt ;

la figure 2 en est une vue en coupe axiale, suivant la ligne brisée II-II de la figure 1 ;

la figure 3 reprend pour partie la figure 1, le dispositif amortisseur de torsion concerné étant supposé en rotation ;

les figures 4 et 5 sont des diagrammes illustrant le mode de fonctionnement du dispositif amortisseur de torsion suivant l'invention ;

les figures 6-7, 8-9, 10-11, 12-13 reprennent respectivement pour partie les figures 1-2 et concernent respectivement diverses variantes de réalisation ;

la figure 14 est une vue analogue à celle de la figure 12, le dispositif amortisseur de torsion concerné étant supposé en rotation ;

la figure 15 est une vue partielle en élévation-coupe, suivant la ligne brisée XV-XV de la figure 16, et avec un arrachement local, d'un autre dispositif amortisseur de torsion suivant l'invention, représenté à l'arrêt ;

la figure 16 est une vue axiale de ce dispositif amortisseur de torsion, suivant la ligne brisée XVI-XVI de la figure 15 ;

la figure 17 reprend pour partie la figure 15, le dispositif amortisseur de torsion concerné étant supposé en rotation ;

la figure 18 est un diagramme illustrant le mode de fonctionnement de ce dispositif amortisseur de torsion ;

la figure 19 reprend pour partie la figure 17 et se rapporte à une autre phase de fonctionnement du dispositif amortisseur de torsion concerné ;

la figure 20 est une vue en coupe axiale, suivant la lignée brisée XX-XX de la figure 22, d'un autre dispositif amortisseur de torsion suivant l'invention ;

la figure 21 en est une vue partielle en élévation, suivant la flèche XXI de la figure 20 ;

la figure 22 en est une vue partielle en coupe transversale, suivant la ligne brisée XXII-XXII de la figure 20 ;

la figure 23 en est une vue partielle en coupe transversale, développée à plat, suivant la ligne XXIII-XXIII de la figure 20 ;

la figure 24 reprend pour partie la figure 21, le dispositif amortisseur de torsion concerné étant supposé en rotation ;

les figures 25 à 32 sont des demi-vues en coupe axiale schématique de divers types de dispositifs amortisseurs de torsion auxquels peut s'appliquer l'invention.

Ces figures illustrent d'une manière générale l'application de l'invention à la constitution d'une friction d'embrayage à moyeu amortisseur.

Ainsi qu'on le sait, une telle friction d'embrayage comporte globalement un moyeu 10, un voile de moyeu 11 formant radialement une pièce annulaire entourant le moyeu 10, deux rondelles de guidage annulaires 12 qui s'étendent parallèlement au voile de moyeu 11, de part et d'autre de celui-ci, autour du moyeu 10, et qui sont reliées l'une à l'autre par des colonnettes axiales 13 traversant le voile de moyeu 11 à la faveur d'échancrures 14 prévues à cet effet à la périphérie de celui-ci, et un disque de friction 15, qui porte à sa périphérie, et de part et d'autre de celle-ci, des garnitures de frottement 16.

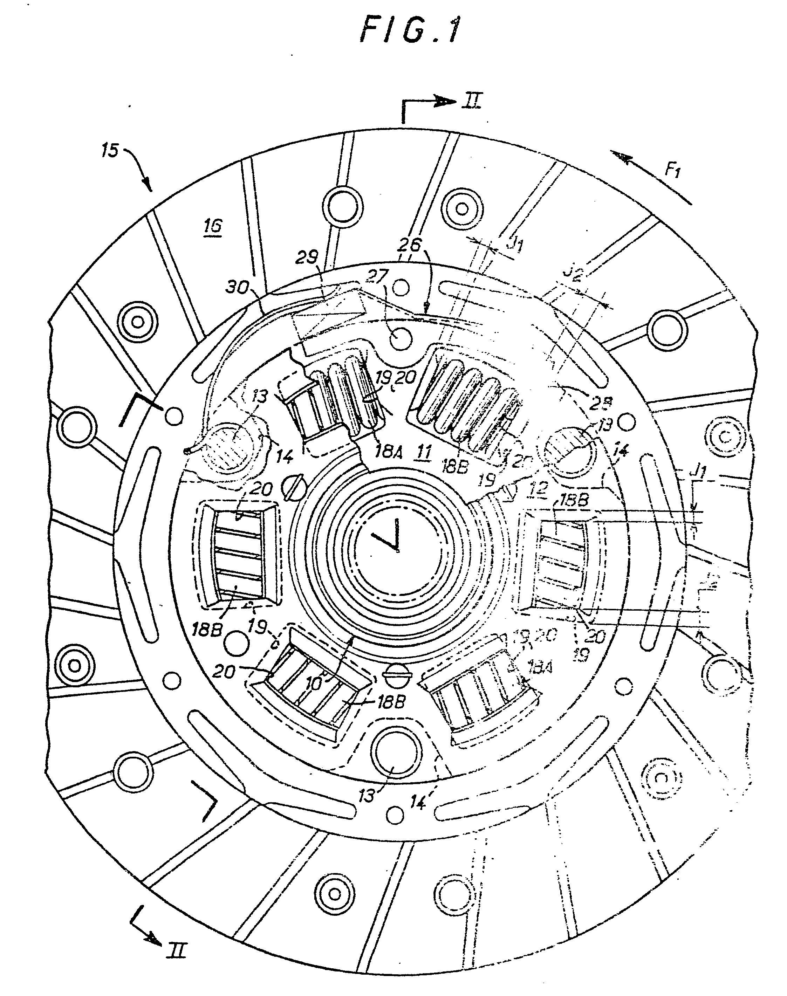

Dans l'exemple de réalisation représenté sur les figures 1 à 3, le disque de friction 15 est solidaire des rondelles de guidage 12, en étant rapporté sur l'une de celles-ci par les mêmes colonnettes 13 qui solidarisent l'une à l'autre ces rondelles de guidage 12, les rondelles de guidage 12 sont librement rotatives autour du moyeu 10 dans les limites d'un débattement angulaire déterminé, tel qu'il apparaîtra ci-après, et le voile de moyeu 11 est solidaire du 10.

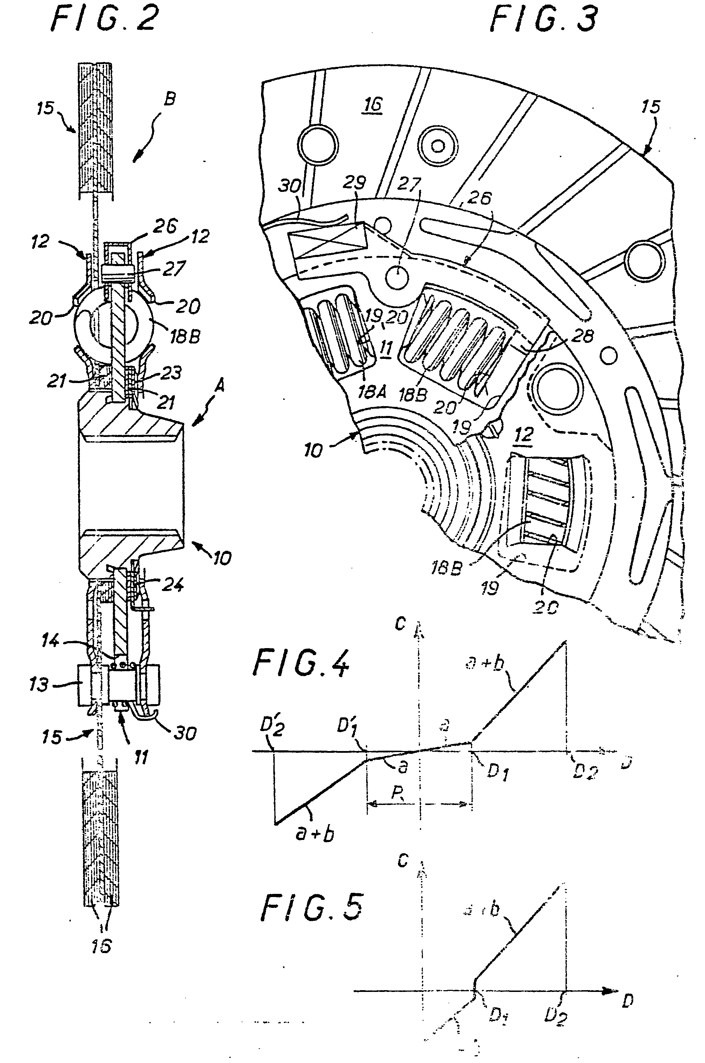

Une telle friction d'embrayage comporte ainsi deux parties coaxiales montées rotatives l'une par rapport à l'autre dans les limites du débattement angulaire déterminé mentionné ci-dessus, à savoir une partie A formée par le moyeu 10 et le voile de moyeu 11, et une partie B formée par les rondelles de guidage 12 et le disque de friction 15, et, parallèlement l'une à l'autre, ces parties A, B comportent au moins une pièce annulaire, à savoir le voile de moyeu 11, pour la partie A, et l'une ou l'autre des rondelles de guidage 12 pour la partie B, figure 2.

Le débattement angulaire entre les parties A, B ainsi constituées se fait à l'encontre d'organes élastiques 18A, 18B, qui sont chacun aptes à agir circonférentiellement entre elles pour une plage au moins dudit débattement angulaire, et qui sont chacun individuellement logés pour partie dans une fenêtre 19 du voile de moyeu 11 et pour partie dans des fenêtres 20 des rondelles de guidage 12.

Il s'agit, dans l'exemple de réalisation représenté, de ressorts hélicoïdaux globalement allongés tangentiellement par rapport à une circonférence de l'ensemble.

Pour les ressorts 18A, qui sont des ressorts de relativement faible raideur, et qui sont au nombre de deux dans l'exemple de réalisation représenté, en étant disposés en positions diamétralement opposées l'un par rapport à l'autre, le développement circonférentiel de la fenêtre 19 du voile de moyeu 11 dans lequel ils sont logés est égal à celui des fenêtres 20 des rondelles de guidage 12 dans lesquelles ils sont également logés.

Par contre, pour les ressorts 18B, qui sont des ressorts de relativement forte raideur, et qui sont au nombre de quatre dans l'exemple de réalisation représenté, le développement circonférentiel des fenêtres 19 du voile de moyeu 11 est supérieur à celui des fenêtres 20 des rondelles de guidage 12, en sorte que, entre les bords radiaux correspondants de ces fenêtres, il existe un jeu circonférentiel J1 pour le sens de rotation de la friction qui, tel que repéré par une flèche F1 à la figure 1, correspond à un fonctionnement « en tirage » de celle-ci, et un jeu circonférentiel J2 pour le sens de rotation inverse, qui correspond à un fonctionnement « en rétro » de cette friction.

Par exemple, et tel que représenté, le jeu circonférentiel J1 peut être inférieur au jeu circonférentiel J2.

Dans l'exemple de réalisation représenté, les jeux J1, J2 sont identiques pour tous les ressorts de forte raideur 18B, mais il va de soi qu'il peut en être autrement.

Dans l'exemple de réalisation représenté, la friction comporte deux rondelles de frottement 21, qui sont disposées chacune respectivement de part et d'autre du voile de moyeu 11, au contact de celui-ci, et une rondelle ondulée 23, à élasticité axiale, qui, prenant appui sur une rondelle de guidage 12, agit sur la rondelle de frottement 21 correspondante par l'intermédiaire d'une rondelle de répartition 24 calée en rotation sur cette rondelle de guidage 12.

Une telle friction d'embrayage est bien connue par elle-même ; elle ne sera pas décrite plus en détail ici.

Son fonctionnement est également bien connu.

Il est illustré par le diagramme de la figure 4, sur lequel est rapporté en abscisses le débattement angulaire D entre les parties A, B, et, en ordonnées, le couple C transmis d'une de ces parties à l'autre.

Lorsqu'un couple menant est appliqué à la partie B, dans le sens de la flèche F1 de la figure 1, il est progressivement transmis à la partie A par les ressorts 18A, 18B.

Dans un premier temps, pour les valeurs de couple faibles, et c'est le cas au point mort, véhicule à l'arrêt, seuls interviennent les ressorts de faible raideur 18A, pour élimination des bruits de point mort correspondants, les ressorts de forte raideur 18B se trouvant à distance de la tranche correspondante des fenêtres 19 du voile de moyeu 11 dans lesquelles ils sont logés, en raison du jeu circonférentiel J1 précisé ci-dessus (droite a du diagramme).

Dans un deuxième temps, dès que, pour un fonctionnement « en tirage », le couple augmente, les ressorts de faible raideur 18A se trouvent saturés, et le jeu circonférentiel J1 est absorbé, pour une valeur D1 du débattement angulaire correspondant à ce jeu circonférentiel J1.

Entrent alors en action les ressorts de forte raideur 18B, jusqu'à leur saturation, qui intervient pour une valeur D2 du débattement angulaire formant la limite correspondante de celui-ci (droite a + b du diagramme).

Pour un fonctionnement « en rétro », un processus analogue se développe, les ressorts 18A, 18B, précédemment comprimés, se détendant d'abord, jusqu'à réapparition du jeu circonférentiel J1 pour les ressorts de forte raideur 18B, puis, dès que le couple s'annule et devient négatif, ce qui est quasi instantané, se comprimant à nouveau, les ressorts de faible raideur 18A étant les premiers à se recomprimer, et les ressorts de forte raideur 18B n'intervenant que pour un débattement angulaire D'1 correspondant à l'absorption du jeu circonférentiel J2 précisé ci-dessus.

Globalement, les ressorts de faible raideur 18A agissent ainsi seuls dans une zone de filtration des bruits de point mort P allant du débattement angulaire D1 « en tirage », à un débattement angulaire D'1 « en rétro », et les ressorts de forte raideur 18B n'ajoutent leurs effets aux ressorts de faible raideur 18A que de part et d'autre de cette zone de filtration des bruits de point mort P.

Bien entendu, et pour une simplification du diagramme de la figure 4, il n'a pas été tenu compte ici du phénomène d'hystérésis se développant conjointement en raison des frottements internes de la friction.

Suivant l'invention, à une telle friction d'embrayage à moyeu amortisseur, qui comporte donc deux parties coaxiales A, B montées rotatives l'une par rapport à l'autre, dans les limites d'un débattement angulaire déterminé, et à l'encontre d'organes élastiques 18A, 18B aptes à agir circonférentiellement entre elles pour une plage au moins dudit débattement angulaire, il est incorporé un organe d'interposition 26, qui est sensible à la force centrifuge, à l'encontre de moyens de rappel, et qui est ainsi mobile de manière réversible entre une position rétractée d'attente, pour laquelle il est sans effet, et, au-delà d'une vitesse de rotation déterminée liée à ces moyens de rappel, une position de service, pour laquelle, prenant circonférentiellement appui sur l'une quelconque desdites parties A, B, soit directement, soit indirectement, il est apte à fournir un appui circonférentiel à l'un au moins desdits organes élastiques 18A, 18B, en sorte que les caractéristiques de fonctionnement de l'ensemble s'en trouvent modifiées.

Dans l'exemple de réalisation représenté sur les figures 1 à 3, un seul organe d'interposition 26 est prévu.

Cet organe d'interposition 26 est porté par la partie A, et il est apte à fournir par lui-même un appui circonférentiel à l'un des ressorts de forte raideur 18B, ainsi qu'il apparaîtra ci-après.

En pratique, dans l'exemple de réalisation représenté sur les figures 1 à 3, l'organe d'interposition 26 a la forme d'un étrier, et, engagé radialement sur le voile de moyeu 11, à la périphérie de celui-ci, il est monté rotatif sur ce voile de moyeu 11, autour d'un axe 27 parallèle à l'axe de l'ensemble ; par son axe 27, il prend donc circonférentiellement appui sur le voile de moyeu 11.

A l'une de ses extrémités, il comporte un bec 28 par lequel, en position de service, figure 3, il est susceptible de se crocheter circonférentiellement sur le ressort de forte raideur 18B concerné.

A son autre extrémité, il porte une masselotte 29, qui en augmente la sensibilité à la force centrifuge, et sur laquelle agit un ressort 30, qui est porté par l'une des colonnettes axiales 13, en prenant appui sur une rondelle de guidage 12, et qui constitue les moyens de rappel associés à l'organe d'interposition 26.

Pour des valeurs relativement faibles de la vitesse de rotation de la friction, inférieures par exemple à 900 tours/mn, l'organe d'interposition 26 reste en position rétractée d'attente, figure 1, pour laquelle son bec de retenue 28 est à distance du ressort de forte raideur 18B concerné.

Le fonctionnement de la friction est alors celui décrit ci-dessus, et le diagramme représentatif de ce fonctionnement est celui de la figure 4.

Pour des valeurs de la vitesse de rotation de la friction plus grandes, et par exemple supérieures à 1 100 tours/mn, l'organe d'interposition 26, sous les effets de la force centrifuge, passe en position déployée de service, figure 3.

Dès lors, si le fonctionnement de l'ensemble passe d'un mode de fonctionnement « en tirage » à un mode de fonctionnement « en rétro », le bec de retenue 28 de l'organe d'interposition 26 se trouve interposé sur le trajet suivi par l'extrémité correspondante du ressort de forte raideur 18B concerné lors de son déploiement de détente caractéristique d'un tel passage, en sorte que le déploiement de détente de ce ressort de forte raideur 18B se trouve dès lors interrompu.

Par mesure de simplicité on supposera ci-après d'une part que cette interruption du déploiement de détente du ressort de forte raideur 18B en question intervient pour le débattement angulaire D1 précisé ci-dessus, et que ce ressort de forte raideur 18B a, au repos, une précontrainte supérieure à la raideur des ressorts de faible raideur 18A.

Ce ressort de forte raideur 18B, alors en appui, d'une part, par l'une de ses extrémités, sur le bec 28 de l'organe d'interposition 26 suivant l'invention, qui est lié au voile de moyeu 11, et d'autre part, à l'autre de ses extrémités, sur les rondelles de guidage 12 et le voile de moyeu 11, et donc ainsi sollicité en compression, s'oppose momentanément à la détente des ressorts de faible raideur 18A.

Il en résulte une modification des caractéristiques de fonctionnement de la friction par rapport à ce qu'elles étaient antérieurement, l'organe d'interposition 26 suivant l'invention s'étant substitué, pour le ressort 18B concerné, au bord radial correspondant de la fenêtre 19 du voile de moyeu 11 dans laquelle il est logé, et tout se passant comme si le développement circonférentiel de cette fenêtre se trouvait ainsi modifié.

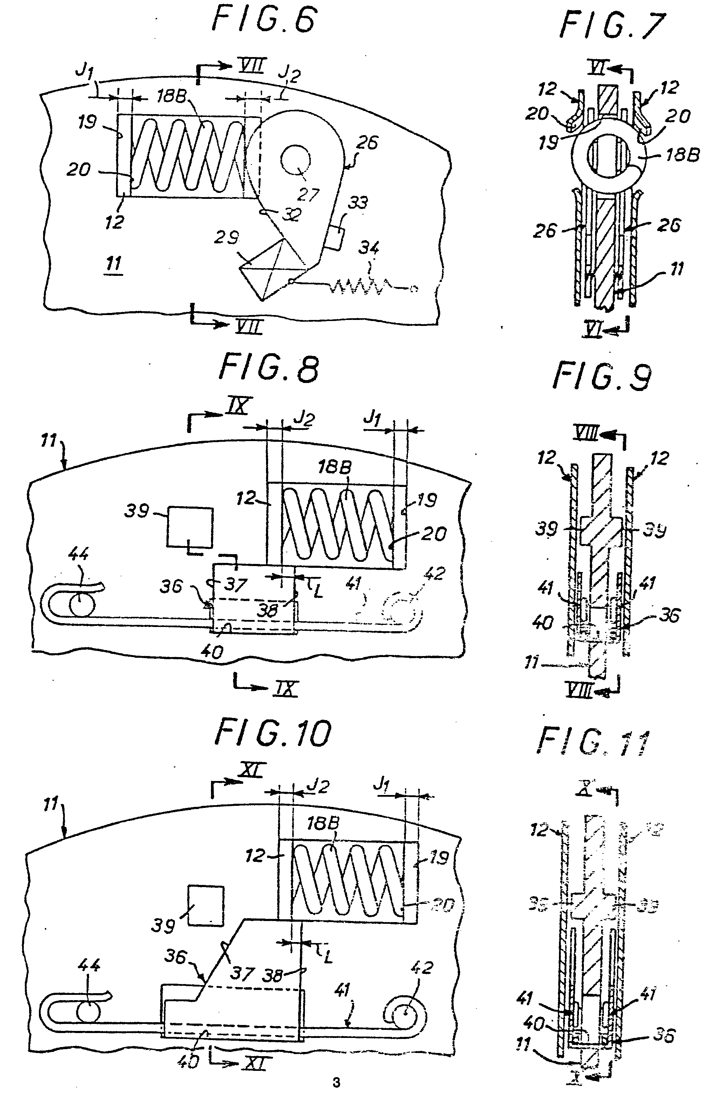

En pratique, cette modification se traduit, sur le diagramme de la figure 5, par une chute brutale du couple pour le débattement angulaire D1, puis par la poursuite de la décroissance de ce couple et du débattement angulaire suivant une pente supérieure à celle résultant de la raideur des seuls ressorts de faible raideur 18A.

Ainsi, ces ressorts de faible raideur 18A sont empêchés d'intervenir seuls pour les valeurs de couple faibles lorsque la vitesse de rotation de la friction est supérieure à 1 100 tours/mn, ce qui évite un basculement bruyant de cette friction lors du passage d'un fonctionnement en direct à un fonctionnement en rétro.

Si le ressort de forte raideur 18B avec lequel coopère l'organe d'interposition 26 n'a pas de précontrainte au repos, la chute de couple pour le débattement angulaire D1 ne se fait pas, comme précédemment, suivant une droite sensiblement verticale, mais suivant une droite légèrement inclinée.

Bien entendu, plusieurs ressorts de forte raideur 18B peuvent être concernés par l'intervention d'un ou plusieurs organes d'interposition 26, et, en pratique, il est prévu au moins deux organes d'interposition 26 en positions symétriquement opposées l'un par rapport à l'autre, pour éviter que leur intervention n'induise une quelconque composante radiale sur l'axe de l'ensemble.

Cependant, au moins pour certaines applications, il peut être intéressant que le nombre de ressorts 18B concernés par l'intervention d'un ou plusieurs organes d'interposition suivant l'invention soit tel qu'il en résulte une composante radiale sur l'axe de l'ensemble.

En effet, il se développe dans ce cas une hystérésis radiale variable, le déplacement radial de la partie B vis-à-vis de la partie A dû à une telle composante radiale induisant un frottement radial soit entre les rondelles de guidage 12 et les rondelles de frottement 21, soit entre les rondelles de frottement 21 et le voile de moyeu 11.

Pour d'autres applications, il peut de même être intéressant que la totalité des ressorts 18B en cause soient concernés par l'intervention d'un, ou plusieurs, organes d'interposition suivant l'invention ; il en résulte en effet l'obtention d'une hystérésis particulière, lesdits ressorts jouant conjointement, d'un seul bloc, à couple constant, pour une portion du débattement angulaire entre les parties A, B concernées.

Suivant la variante de réalisation illustrée par les figures 6 et 7, l'organe d'interposition 26, qui est rotatif, comme précédemment, se réduit à deux flasques, alourdis chacun par une masselotte 29, et, pour coopération avec un ressort 18B, il comporte, du côté de l'extrémité de celui-ci correspondant au jeu circonférentiel J1, une surface de came 32 par laquelle, en position déployée de service, il est susceptible de fournir un appui circonférentiel à un tel ressort 18B.

Ainsi, l'intervention de cet organe d'interposition au lieu de se faire, comme précédemment, par tout ou rien, se fait, dans ce cas, progressivement, tout se passant comme si le développement circonférentiel de la fenêtre 19 du voile de moyeu 11 dans laquelle est logé le ressort 18B concerné était progressivement variable en fonction de la vitesse de rotation de la friction.

Une butée fixe 33, portée par le voile de moyeu 11, et vers laquelle un ressort de rappel 34 sollicite l'organe d'interposition rotatif 26, définit alors la position rétractée d'attente ou de repos de celui-ci, et entre cette position rétractée d'attente et la position déployée de service correspondante, le développement radial de la surface de came 32 vis-à-vis de l'axe 27 s'augmente d'une distance correspondant au moins au jeu circonférentiel J1.

Dans les variantes de réalisation illustrées par les figures 8 à 11, il s'agit d'un organe d'interposition 36 monté mobile globalement radialement sur le voile de moyeu 11 et présentant, en positions circonférentiellement opposées, deux épaulements 37, 38, le premier pour coopération avec une butée 39 solidaire de ce voile de moyeu 11, le second pour coopération avec un ressort 18B, du côté de celui-ci correspondant au jeu circonférentiel J1, comme précédemment.

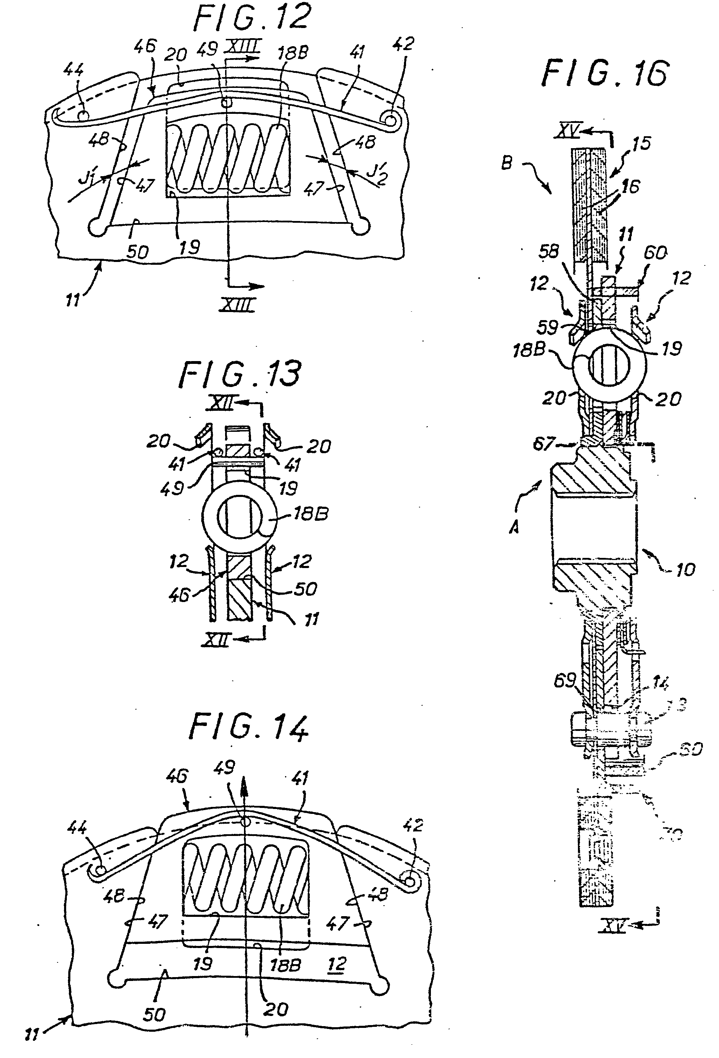

Suivant la forme de réalisation représentée sur les figures 8 et 9, ces deux épaulements 37, 38 sont parallèles l'un à l'autre ; en variante, figures 10 et 11, ils sont obliques l'un par rapport à l'autre, pour action progressive de l'organe d'interposition 36 concerné.

Quoi qu'il en soit, dans l'une et l'autre de ces formes de réalisation, un tel organe d'interposition se présente par exemple sous la forme d'un étrier, dont la partie médiane traverse le voile de moyeu 11, à la faveur d'un évidement 40 prévu à cet effet dans celui-ci et apte à en assurer un guidage radial convenable et les moyens de rappel qui lui sont associés comportent, de chaque côté du voile de moyeu 11, un ressort de flexion 41, qui, à une extrémité, est attelé de manière fixe au voile de moyeu 11, sur un ergot 42 porté en saillie par celui-ci, et qui, à l'autre extrémité, après traversée de l'organe d'interposition 36, est attelé avec jeu, par un engagement du type à boutonnière, sur un ergot 44 porté également en saillie par le voile de moyeu 11 ; un tel ressort de flexion est prévu sur chaque face du voile de moyeu 11.

L'épaulement 38 de cet organe d'interposition 36 est circonférentiellement à une distance L de la tranche latérale correspondante des fenêtres 20 des rondelles de guidage 12 qui correspond angulairement au moins au jeu circonférentiel J1, et, pour la forme de réalisation des figures 8, 9, son épaulement 37 est radialement sensiblement au droit de la tranche latérale correspondante de la butée 39, pour appui sur celle-ci.

Dans ces formes de réalisation, l'organe d'interposition 36 constitue par lui-même une masselotte sensible à la force centrifuge.

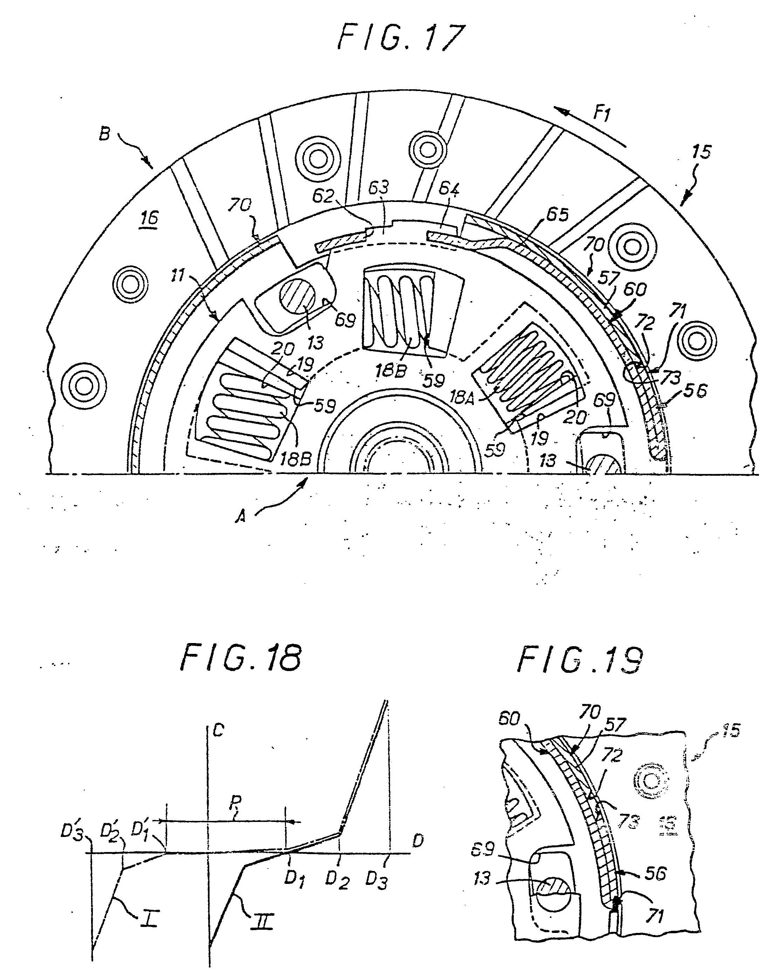

Dans la forme de réalisation illustrée par les figures 12 à 14, l'organe d'interposition suivant l'invention est formé par une portion 46 du voile de moyeu 11, qui est en forme de coin, et qui est détachée de la partie courante de ce voile de moyeu, ladite portion comportant la fenêtre 19 dans laquelle est engagé pour partie le ressort 18B concerné et étant délimitée latéralement par des épaulements 47, qui sont obliques l'un par rapport à l'autre, en convergeant en direction opposée à l'axe de l'ensemble, et qui sont ainsi aptes à coopérer en coincement avec des épaulements complémentaires 48 prévus à cet effet sur la portion courante du voile de moyeu 11 ; au repos, tel que représenté à la figure 18, des jeux circonférentiels J'1, J'2 existent, de part et d'autre, entre les épaulements 47, d'une part, et les épaulements 48, d'autre part.

Conjointement, les fenêtres 20 des rondelles de guidage 12 dans lesquelles le ressort 18B est également engagé pour partie sont suffisamment allongées radialement pour permettre un débattement radial de ce ressort, tel qu'il apparaîtra ci-après.

Les moyens de rappel associés à l'organe d'interposition 46 sont constitués, dans l'exemple de réalisation représenté, par un ressort de flexion 41 qui est du type de celui décrit ci-dessus en référence aux figures 8 à 10 et sur lequel porte cet organe d'interposition 46, par un ergot 49 qu'il porte à cet effet et qui fait saillie sur chacune de ses faces.

Dans sa position rétractée d'attente, l'organe d'interposition 46 est en appui contre un épaulement 50 de la portion courante du voile de moyeu 11, et de préférence, cet épaulement est de contour circulaire.

Pour les faibles vitesses de rotation, l'organe d'interposition 46 reste au contact de cet épaulement 50 et, au terme de l'intervention des organes élastiques à action axiale de faible raideur 18A, il vient en appui, par son épaulement 47, contre l'épaulement 48 de la portion courante du voile de moyeu 11 correspondant au sens de rotation en cours, lorsque le jeu circonférentiel J'1 correspondant est absorbé.

Mais, pour les vitesses élevées, l'organe d'interposition 46 se déplace radialement, à l'encontre de son ressort de rappel 41, figure 14, et, au terme de ce déplacement, il vient se coincer entre les épaulements 48 de la partie courante du voile de moyeu 11.

Ainsi coincé, tout se passe comme s'il était solidarisé à la partie courante du voile de moyeu 11, et donc, prenant appui circonférentiellement sur celui-ci, il fournit dès lors un appui circonférentiel au ressort à forte raideur 18B concerné.

Il en résulte, comme précédemment, que les caractéristiques de fonctionnement de l'ensemble s'en trouvent modifiées.

Bien entendu, dans ce qui précède, les jeux circonférentiels J'1, J'2 ont été supposés correspondre aux jeux circonférentiels J1, J2 précisés précédemment.

Mais ils pourraient aussi bien en être différents.

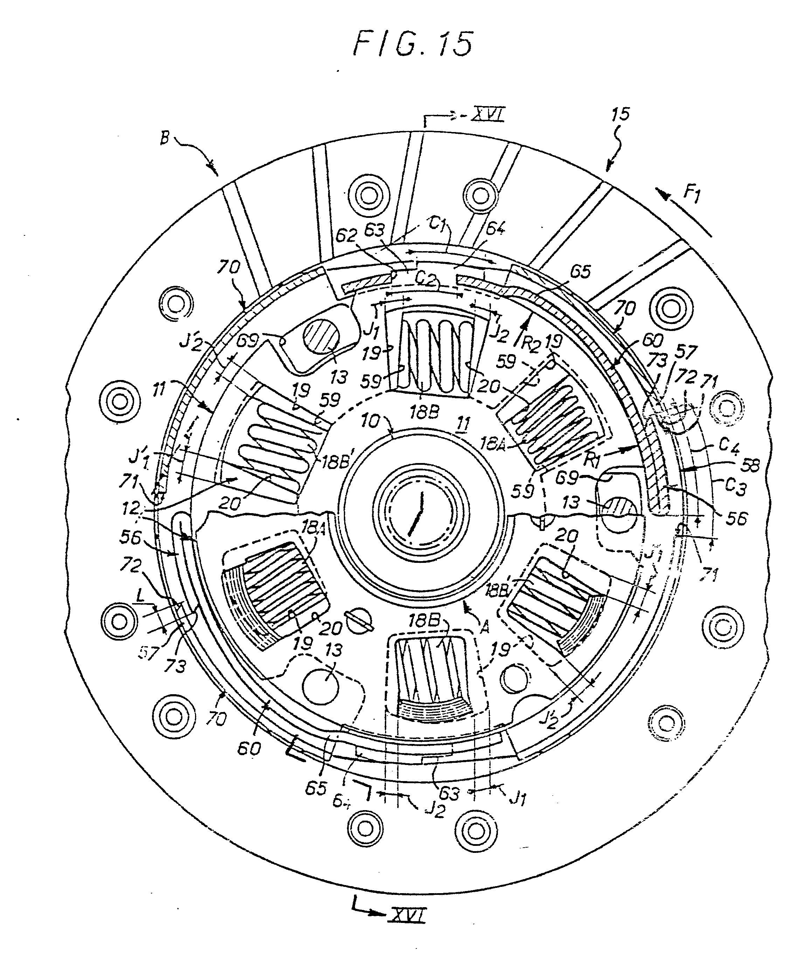

Dans les variantes de réalisation illustrées par les figures 15 à 24, il est associé à l'organe d'interposition 56 mis en œuvre suivant l'invention, d'une part un organe d'appui 57, qui s'étend axialement, et avec lequel, en position déployée de service, il est apte à venir en appui circonférentiel positif, et d'autre part une plaque annulaire 58, qui est engagée par des évidements 59 sur les organes élastiques 18A, 18B prévus entre les parties A, B de la friction, sans jeu circonférentiel pour l'un au moins de ceux-ci, et avec un jeu circonférentiel pour les autres, ainsi qu'il apparaîtra ci-après, et qui forme une pièce portant l'un quelconque des organes, organe d'interposition 56 — organe d'appui 57, tandis que l'autre desdits organes est solidaire d'une pièce appartenant à l'une quelconque desdites parties A, B.

En pratique, ces figures 15 à 24 illustrent à titre d'exemple l'application de l'invention à une friction du type de celle décrite dans FR-A-2 268 994, ainsi que son addition FR-A-2 282 577.

Une telle friction est analogue à celle décrite précédemment, avec toutefois les différences suivantes : tout d'abord les ressorts de faible raideur 18A sont montés en opposition, l'un de ces ressorts se comprimant alors que l'autre se détend, et réciproquement, suivant le sens de rotation ; ensuite, les ressorts de forte raideur sont répartis en deux groupes 18B, 18B', les jeux circonférentiels J'1, J'2 associés aux ressorts 18B' se trouvant respectivement supérieurs aux jeux circonférentiels J1, J'1 associés aux ressorts 18B, en sorte que l'intervention des ressorts 18B' se trouve retardée par rapport à celle des ressorts 18B, dans un sens de rotation comme dans l'autre.

Dans ces formes de réalisation, il y a deux organes d'interposition 56, disposés en positions diamétralement opposées, et à chacun d'eux est associé un organe d'appui 57.

Suivant la forme de réalisation illustrée par les figures 15 à 19, ces organes d'interposition 56 sont portés par la partie A, et plus précisément par le voile de moyeu 11, et les organes d'appui 57 associés sont portés par la plaque annulaire 58.

Mais il va de soi qu'une disposition inverse pourrait être adoptée, les organes d'interposition 56 étant portés par la plaque annulaire 58 et les organes d'appui 57 par la partie A.

Il va de soi également que la partie B pourrait être substituée à la partie A dans l'un et l'autre cas.

Dans l'exemple de réalisation représenté sur les figures 15 à 19, chaque organe d'interposition 56 est porté par un bras élastiquement déformable 60, qui s'étend circonférentiellement, et qui, à distance de l'organe d'interposition 56, est solidaire de la pièce qui le porte, en l'espèce le voile de moyeu 11, ledit bras élastiquement déformable constituant par lui-même les moyens de rappel associés à l'organe d'interposition 56 qu'il porte.

Dans l'exemple de réalisation représenté, un tel bras élastiquement déformable 60 est formé par une lame métallique de section relativement mince radialement et relativement allongée axialement, mais il va de soi que sa section pourrait au contraire être relativement allongée radialement et relativement mince axialement.

L'organe d'interposition 56 correspondant est formé, dans cet exemple de réalisation, par un simple repli sur lui-même, en U, du bras élastiquement déformable 60 qui le porte, ce repli étant effectué du côté de ce bras radialement le plus éloigné de l'axe de l'ensemble, mais il va de soi que, en variante, l'organe d'interposition 56 peut être formé d'une pièce distincte du bras élastiquement déformable 60 qui le porte, cette pièce étant convenablement rapportée sur ce bras, par exemple par rivetage.

Pour sa solidarisation à la pièce de la friction qui le porte, et donc en pratique au voile de moyeu 11, un tel bras élastiquement déformable 60 est, dans l'exemple de réalisation représenté, simplement engagé par une boutonnière 62 sur une patte 63 dudit voile de moyeu 11, ladite patte s'étendant radialement et se prolongeant par un talon de retenue 64 qui s'étend circonférentiellement pour partie en porte-à-faux à compter d'elle, en direction de l'organe d'interposition 56 correspondant, et qui a un développement circonférentiel C1 sensiblement égal à celui de celle-ci.

Le développement circonférentiel C2 de la boutonnière 62 du bras élastiquement déformable 60 est légèrement supérieur à un tel développement circonférentiel C1 de la patte 63 et du talon de retenue 64 correspondant, ce qui permet sa mise en place par simple engagement : dans un premier temps le bras élastiquement déformable 60 est présenté radialement par sa boutonnière 62 sur le talon de retenue 64 puis, après franchissement de celui-ci, est légèrement basculé en direction de l'axe de l'ensemble de manière à pouvoir être engagé sous ce talon de retenue 64, et, enfin, il est déplacé circonférentiellement sous celui-ci jusqu'à pouvoir venir être engagé radialement sur la patte 63.

Son maintien est dès lors assuré, la distance radiale séparant le talon de retenue 64 de la tranche périphérique du voile de moyeu 11 n'étant que légèrement supérieure à son épaisseur.

Pour la configuration de repos de la friction, l'extrémité libre d'un bras élastiquement déformable 60 portant l'organe d'interposition 56 correspondant se trouve élastiquement plaquée contre la pièce qui le porte, et donc, en l'espèce, contre la tranche périphérique du voile de moyeu 11, et, pour cette configuration de repos de la friction, il est donc sous précontrainte élastique.

Dans l'exemple de réalisation représenté, le bras élastiquement déformable 60 présente, au voisinage du talon de retenue 64, une déformation 65 qui l'écarte localement de la tranche périphérique du voile de moyeu 11.

En pratique, dans cet exemple de réalisation, la plaque annulaire 58 associée aux organes d'interposition 56 est insérée axialement entre le voile de moyeu 11 et le disque de friction 15, au droit de la partie radiale du palier 67 usuellement inséré entre ce disque de friction 13 et la rondelle de guidage 12 correspondante, d'une part, et le moyeu 10, d'autre part, et les évidements 59 qu'elle comporte pour son engagement sur les ressorts 18A, 18B, 18B' sont constitués par des échancrures qu'elle présente à sa périphérie interne.

Dans l'exemple de réalisation représenté, c'est sur les ressorts 18B que cette plaque annulaire 58 est engagée sans jeu par ses évidements 59 correspondants.

Autrement dit, pour les ressorts 18B, les évidements 59 sont ajustés au développement circonférentiel de ces ressorts, pour l'engagement sans jeu recherché, ledit développement circonférentiel correspondant à celui défini par les fenêtres 20 correspondantes des rondelles de guidage 12.

Par contre, pour les ressorts 18A et 18B', les évidements 59 de la plaque annulaire 58 débordent circonférentiellement de part et d'autre de ceux-ci.

De même, pour la traversée des colonnettes axiales 13, cette plaque annulaire 58 présente des boutonnières 69 que lesdites colonnettes 13 traversent avec jeu.

Ainsi, dans cette forme de réalisation, le montage de la plaque annulaire 58 est flottant, cette plaque annulaire 58 n'étant, radialement, dans son plan, qu'au contact des seuls ressorts 18B, par les tranches radiales de ses évidements 59 correspondants.

Une telle disposition permet avantageusement une compensation d'éventuelles tolérances de fabrication et/ou de montage.

Mais il va de soi que, si désiré, un centrage rigide de la plaque annulaire 58 peut être obtenu, soit par les colonnettes axiales 13, soit par le palier 67, par contact avec de telles colonnettes ou un tel palier.

Dans la forme de réalisation représentée sur les figures 15 à 19, les organes d'appui 57 que porte la plaque annulaire 58 pour coopération avec les organes d'interposition 56 appartiennent à une même couronne axiale 70, qui est établie radialement au droit de ces organes d'interposition 56, au-delà de ceux-ci, à la périphérie externe de ladite plaque annulaire 58, et qui présente, pour chaque organe d'interposition 56, une échancrure 71 propre à l'engagement d'un tel organe d'interposition 56.

Le développement circonférentiel C3 d'une telle échancrure 71 est largement supérieur à celui C4 de l'organe d'interposition 56 correspondant pour ne pas perturber le débattement angulaire entre les parties A, B.

Dans l'exemple de réalisation représenté, le bord 72 d'un organe d'appui 57 destiné à coopérer avec un organe d'interposition 56, il s'agit en pratique d'un des bords de l'échancrure 71 correspondante de la couronne 70, est biseauté, et la tranche correspondante 73 d'un tel organe d'interposition 56 est elle-même biseautée de manière complémentaire.

En pratique, pour la configuration de repos de la friction, le développement circonférentiel L entre la tranche 73 d'un organe d'interposition 56 et le bord 72 de l'organe d'appui 57 correspondant correspond au moins, dans l'exemple de réalisation représenté, au jeu angulaire J1 précisé ci-dessus.

En l'absence des organes d'interposition 56, la courbe représentative du fonctionnement de la friction d'embrayage concernée serait, sur le diagramme de la figure 18, sur lequel on a porté, dans les mêmes conditions que précédemment, en abscisses le débattement angulaire D entre les deux parties coaxiales constitutives de cette friction et en ordonnées le couple transmis d'une de ses parties à l'autre, la courbe en traits interrompus I : lorsque, pour un fonctionnement en tirage, la friction tournant dans le sens de la flèche F1 de la figure 15, un couple est appliqué au disque de friction 15 suivant cette flèche F1, seuls sont d'abord à intervenir, entre les deux parties A, B constitutives de la friction, pour la transmission de ce couple, les ressorts de faible raideur 18A ; puis, entrent successivement en action, d'abord les ressorts 18B, pour une valeur D1 du débattement angulaire entre les parties A, B concernées de la friction correspondant à l'absorption du jeu angulaire J1 précisé ci-dessus, et enfin les ressorts 18'B, pour une valeur D2 de ce débattement angulaire correspondant au jeu angulaire J'1 également précisé ci-dessus, ces ressorts 18'B se trouvant à leur tour saturés pour une valeur D3 de ce débattement angulaire constituant de ce fait la valeur finale de celui-ci ; pour un fonctionnement en rétro, un processus analogue se développe, après absorption des jeux J2 et J'2, et jusqu'à saturation, à nouveau, mais en sens inverse, des ressorts 18'B.

Comme précédemment, en l'absence des organes d'interposition 56, seuls les ressorts de faible raideur 18A agissent dans une zone de filtration des bruits de point mort P allant du débattement angulaire D1 « en tirage » au débattement angulaire D'1 « en rétro ».

Lorsque, comme c'est le cas en l'espèce, des organes d'interposition 56 sont présents, les ressorts de faible raideur 18A continuent à agir dans la zone de filtration des bruits de point mort P tant que la vitesse de rotation de la friction demeure faible, et est par exemple inférieure à une valeur de l'ordre de 900 tours/mn : en dessous d'une telle valeur, les organes d'interposition 56 sont sans effet et ils laissent donc leur libre capacité d'action aux ressorts de faible raideur 18A.

Par contre, au-delà de 1 100 tours/mn par exemple, les organes d'interposition 56 passent, sous les effets de la force centrifuge, de leur position rétractée d'attente, pour laquelle l'extrémité libre des bras élastiquement déformables 60 qui les porte est au contact de la tranche périphérique du voile de moyeu 11, figure 15, à une position déployée de service pour laquelle ladite extrémité libre des bras élastiquement déformables 60 est écartée de ladite tranche périphérique du voile de moyeu 11, figure 17.

Dès lors, et dès que le débattement angulaire entre les deux parties A, B constitutives de la friction atteint une valeur suffisante, correspondant par exemple à l'absorption du jeu angulaire J1 marquant la saturation des ressorts de faible raideur 18A, chaque organe de verrouillage 56 s'engage dans l'échancrure 71 correspondante de la couronne 70, cette échancrure se trouvant alors radialement à son niveau, figure 17.

Si le fonctionnement continue à être un fonctionnement « en tirage », c'est-à-dire si le couple à transmettre entre les parties A, B constitutives de la friction continue à croître, le débattement angulaire entre lesdites parties A, B continue à se déployer, figure 19, jusqu'à sa valeur finale D3, suivant le processus décrit ci-dessus.

Par contre, si, par relâchement de l'action d'enfoncement précédemment exercée sur l'accélérateur du véhicule concerné, le fonctionnement de l'ensemble passe d'un tel fonctionnement « en tirage » à un fonctionnement « en rétro », et que, dès lors, la partie A de la friction constituée du moyeu 10 et du voile de moyeu 11 connaît un mouvement angulaire relatif rétrograde vis-à-vis de la partie B de cette friction constituée des rondelles de guidage 12 et du disque de friction 13, chaque organe d'interposition 56 vient se crocheter par sa tranche biseautée 73 sur le bord biseauté 72 de l'organe d'appui 57 qui lui est associé, c'est-à-dire dans l'exemple de réalisation représenté, sur le bord biseauté 72 de l'échancrure 71 correspondante de la couronne 70, et lesdits organes d'interposition 56, qui prennent par ailleurs circonférentiellement appui sur ladite partie A, puisqu'ils en sont solidaires en rotation sont dès lors en mesure, par l'intermédiaire de la plaque annulaire 58 avec laquelle ils sont en prise, d'intervenir sur le déploiement de détente des ressorts de forte raideur 18B lors d'un tel passage d'un mode de fonctionnement « en direct » à un mode de fonctionnement « en rétro », en offrant, par l'intermédiaire de la plaque annulaire 58 un appui circonférentiel spécifique auxdits ressorts 18B.

Comme précédemment, les caractéristiques de fonctionnement de la friction s'en trouvent modifiées, les organes d'interposition 56 se substituant, par l'intermédiaire de la plaque annulaire 58, aux bords radiaux correspondants des fenê-

tres 19 du voile de moyeu 11 dans lesquelles, sont logés les ressorts de forte raideur 18B et modifiant ainsi le développement circonférentiel de ces fenêtres : en pratique, la courbe représentative du fonctionnement de la friction est alors la courbe en trait plein II du diagramme de la figure 5, dont toute plage de filtration due aux ressorts de faible raideur 18A se trouve éliminée.

Bien entendu, il en demeure ainsi tant que la vitesse de rotation de la friction est supérieure à la valeur de 1 100 tours/mn précisée ci-dessus.

Dès qu'elle retombe en dessous de cette valeur, les bras élastiquement déformables 60 rappellent les organes d'interposition 56 en position rétractée d'attente.

Ainsi qu'on le notera, et compte tenu de la déformation 65 qu'ils comportent, les bras élastiquement déformables 60 viennent, lorsque la vitesse de rotation de la friction est suffisante, porter contre la couronne 70.

Par suite, pour un fonctionnement « en tirage », entre par exemple les configurations des figures 17 et 19, ces bras élastiquement déformables 60 interviennent dans le frottement interne de la friction, en raison de leur déplacement relatif vis-à-vis de la couronne 70 au contact de laquelle ils se trouvent alors.

Pour un tel fonctionnement « en tirage », ils participent donc à l'hystérésis de la friction.

Suivant un développement de l'invention, il est tiré parti d'une telle intervention, en l'accentuant, et, à cet effet, chaque bras élastiquement déformable 60 est, sur sa face tournée vers la couronne 70, muni d'une garniture de frottement (non représenté sur les figures).

En variante, la couronne 70 est, sur sa face intérieure tournée vers les bras élastiquement déformables 60, munie d'une telle garniture de frottement (également non représenté sur les figures).

Suivant une autre variante non représentée, une hystérésis semblable est obtenue par frottement entre les organes d'interposition 56 et la couronne 70 pour les faibles valeurs de couple.

Ainsi qu'il est aisé de le comprendre, le biseautage de la tranche 73 des organes d'interposition 56, et celui, complémentaire du bord 72 des organes d'appui 57 associé, sont favorables à un bon crochetage, « en rétro », desdits organes d'interposition sur lesdits organes d'appui, sans décrochement intempestif.

La déformation 65 des bras élastiquement déformables 60 portant ces organes de verrouillage 56 agit dans le même sens.

Par ailleurs, ainsi qu'on le notera, dans la forme de réalisation de l'invention illustrée par les figures 16 à 19, la plaque annulaire 58 à mettre en œuvre est relativement peu épaisse.

De ce fait, et compte tenu également du fait que les organes d'interposition 56 et les bras élastiquement déformables 60 qui les portent n'augmentent en rien l'encombrement axial de la friction d'embrayage concernée, la mise en œuvre de l'invention ne conduit avantageusement dans ce cas à aucune augmentation sensible de l'encombrement axial de cette friction.

Dans ce qui précède, les organes élastiques concernés par les organes d'interposition suivant l'invention sont les seuls ressorts de forte raideur 18B, le développement circonférentiel L précisé ci-dessus ayant une valeur appropriée à cet effet.

Mais il va de soi que, suivant les effets recherchés, cette valeur L peut être modifiée, de manière par exemple à ce que les ressorts de faible raideur 18A soient également concernés, ou que les ressorts de forte raideur 18B' soient les seuls concernés, la plaque annulaire 58 étant établie en conséquence.

D'une manière générale, quelle que soit la forme de réalisation de l'invention, l'intervention d'un organe d'interposition suivant l'invention peut se faire sur n'importe lequel des organes élastiques interposés circonférentiellement entre les parties A, B concernées de la friction, les modalités d'exécution étant adaptées en conséquence.

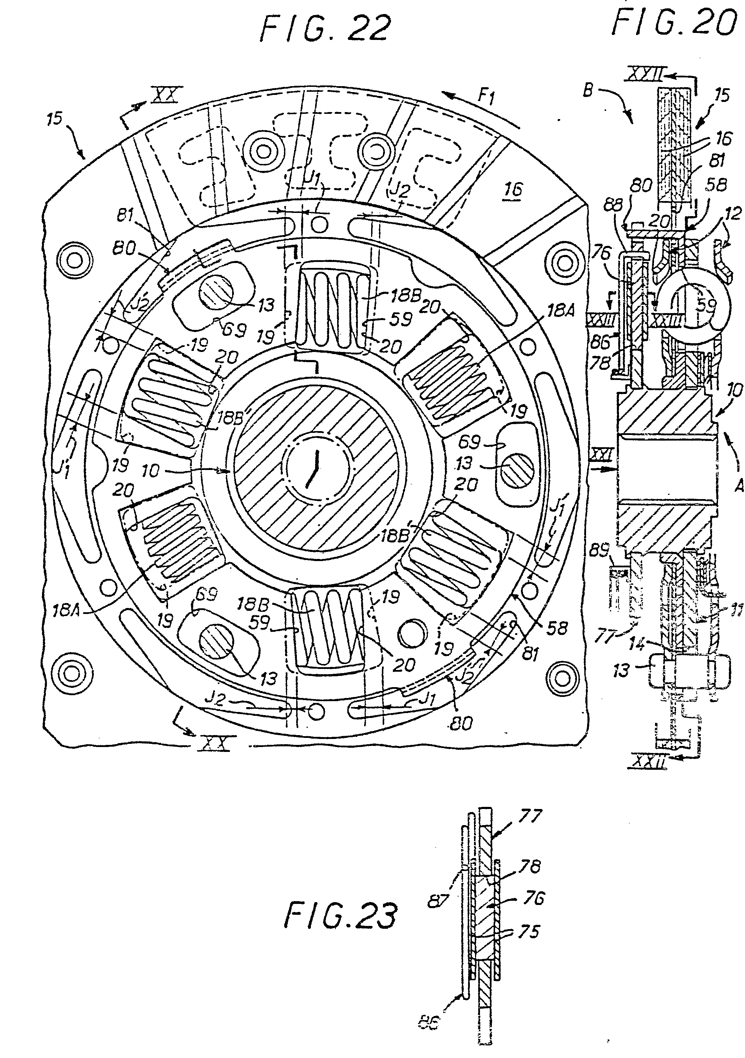

Suivant la variante de réalisation illustrée par les figures 20 à 24, les organes d'interposition suivant l'invention sont constitués de simples plaquettes 76.

Pour leur maintien et leur guidage, l'une des parties A, B concernées, le moyeu 10 de la partie A dans l'exemple représenté, porte radialement un flasque 77, qui en est solidaire en rotation, ce flasque étant par exemple, suivant une technique connue en elle-même, engagé à force sur le moyeu 10 et serti sur celui-ci, à l'extérieur du volume formé par les rondelles de guidage 12, d'un côté ou de l'autre de la friction.

Ce flasque 77 comporte deux guides qui sont allongés radialement, et avec chacun desquels est en prise une plaquette 76.

Dans l'exemple de réalisation représenté, un tel guide est simplement constitué par un évidement 78 du flasque 77 et la plaquette 76 correspondante est simplement montée coulissante dans un tel évidement 77.

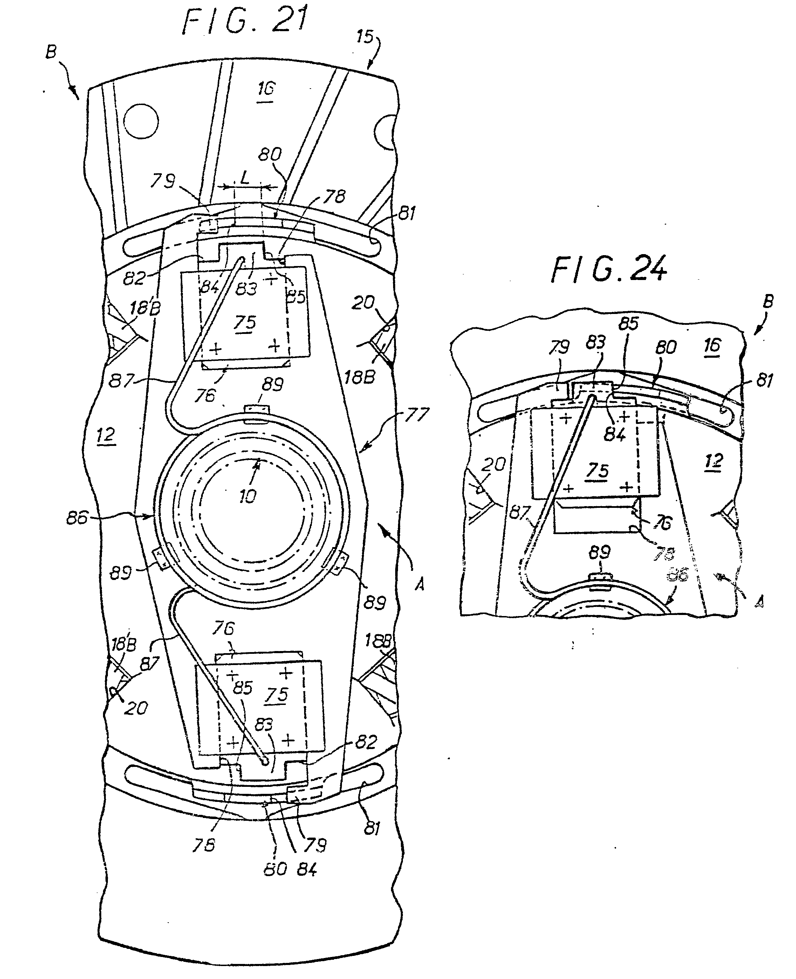

Pour le maintien axial d'une plaquette 76, deux lamelles 75 sont rapportées sur celle-ci, par exemple par soudage, de part et d'autre du flasque 77, et ces lamelles 75 débordent circonférentiellement de l'évidement 78 correspondant, figures 21 et 23.

A l'extrémité de chaque évidement 78, le flasque 77 présente un bec de retenue 79, qui fait saillie circonférentiellement dans ledit évidement 78, figure 21.

Conjointement, les organes d'appui associés aux organes d'interposition 76 sont constitués par des pattes 80 qui s'étendent axialement en direction du flasque 77, à la faveur de passages 81 du disque de friction 15, et qui se prolongent axialement suffisamment pour interférer avec le trajet des plaquettes 76 dans les évidements 78 dans lesquels elles sont montées coulissantes.

Ces pattes 80 sont portées par une plaque annulaire 58 insérée axialement entre le voile de moyeu 11 et le disque de friction 15, et engagée par des évidements 59 sur les ressorts 18A, 18B, 18B' dans les mêmes conditions que ci-dessus.

Au-delà d'un épaulement 82 propre à coopérer en butée avec le bec de retenue 79 correspondant, chaque plaquette 76 comporte un prolongement radial 83 susceptible d'être pincé circonférentiellement entre ce bec de retenue 79 et la patte axiale 80 correspondante.

En pratique, pour la position de repos représentée à la figure 21, le développement circonférentiel L entre, d'une part, la tranche latérale 84 d'une patte 80 la plus proche, circonférentiellement, du bec de retenue 79 correspondant, et, d'autre part, la tranche latérale 85 de la plaquette 76 correspondante la plus éloignée, circonférentiellement, de ce bec de retenue 79, correspond au plus, angulairement, au jeu angulaire J1 défini ci-dessus.

Et, bien entendu, chaque bec de retenue 79 a un développement circonférentiel suffisamment réduit pour ne pas s'opposer à un engagement, en regard de sa propre tranche latérale, du prolongement 83 de la plaquette 76 correspondante.

Dans l'exemple de réalisation représenté, les deux plaquettes 76 ont en commun les moyens de rappel qui leur sont associés, et ceux-ci sont constitués par un ressort de torsion 86, dont les spires entourent le moyeu 10, et dont les branches 87 sont chacune respectivement en prise, par un retour axial 88, avec les plaquettes 76, un tel retour 88 étant engagé dans un passage prévu à cet effet dans une telle plaquette et replié à son extrémité au-delà de celui-ci.

A la périphérie interne de la partie médiane de torsion du ressort 86, des plaquettes en équerre 89 sont rapportées de place en place, par exemple par soudure, sur le flasque 77, pour un maintien convenable de ce ressort de torsion.

Chaque plaquette 76 constitue par elle-même une masselotte sensible à la force centrifuge.

Le ressort 86 qui en forme les moyens de rappel est établi de manière à ce que, l'arrêt, figures 21 à 22, chaque plaquette 76 occupe une position rétractée d'attente, en appui contre le fond de l'évidement 78 correspondant du flasque 77, pour laquelle elle est sans effet ; le ressort 86 est en outre taré de manière à maintenir les plaquettes 76 dans une telle position rétractée d'attente tant que la vitesse de rotation de la friction demeure inférieure à une valeur déterminée, de l'ordre de 900 tours/mn par exemple.

En deçà de celle-ci, les plaquettes 76 n'interviennent donc pas sur les caractéristiques de la friction.

Il n'en est plus ainsi, au-delà de la valeur de vitesse en question, dès que les ressorts 18A sont saturés, et donc que, le jeu angulaire J1 étant absorbé, les pattes axiales 80 formant les organes d'appui se sont en conséquence circonférentiellement déplacées, vis-à-vis des becs de retenue 79, d'un angle au moins égal à ce jeu, laissant ainsi un libre passe aux prolongements 83 des plaquettes 76.

En effet, sous les effets de la force centrifuge, les plaquettes 76 formant les organes d'interposition suivant l'invention viennent alors occuper une position déployée de service pour laquelle, en raison du déplacement circonférentiel précisé ci-dessus pour les pattes axiales 80, elles sont radialement en butée par leurs épaulements 82 contre ces becs de retenue 79, et ont leurs prolongements 83 circonférentiellement insérés entre ceux-ci et ces pattes axiales 76, figure 24.

Dès lors, si, par relâchement de l'action d'enfoncement précédemment exercée sur l'accélérateur du véhicule concerné, le fonctionnement de l'ensemble passe d'un mode de fonctionnement « en tirage » à un mode de fonctionnement « en rétro », les plaquettes 76, qui prennent circonférentiellement appui sur la partie A, par l'intermédiaire du flasque 77, sont dès lors en mesure d'intervenir comme précédemment, par l'intermédiaire de la plaque annulaire 58 sur le déploiement de détente des ressorts de forte raideur 18B, et de modifier en conséquence les caractéristiques de fonctionnement de la friction, comme exposé ci-dessus.

En effet, par leur tranche latérale 84 les pattes 80 formant les organes d'appui associés à ces plaquettes 76, viennent alors porter circonférentiellement sur la tranche latérale 85 correspondante de celles-ci.

Tel que représenté, un jeu peut subsister circonférentiellement entre les prolongements 83 des plaquettes 76 et les becs de retenue 79, l'appui de ces plaquettes 76 sur le flasque 77 se faisant par leur tranche latérale correspondante, dans les évidements 78 du flasque 77 ; en variante les prolongements 83 des plaquettes 76 peuvent porter circonférentiellement sur les becs de retenue 79, ceux-ci ayant alors une double fonction d'appui circonférentiel et de retenue radiale.

Bien entendu, dès que la vitesse de rotation de la friction retombe en dessous de 900 tours/mn, le ressort 86 rappelle les plaquettes 76 en position rétractée d'attente.

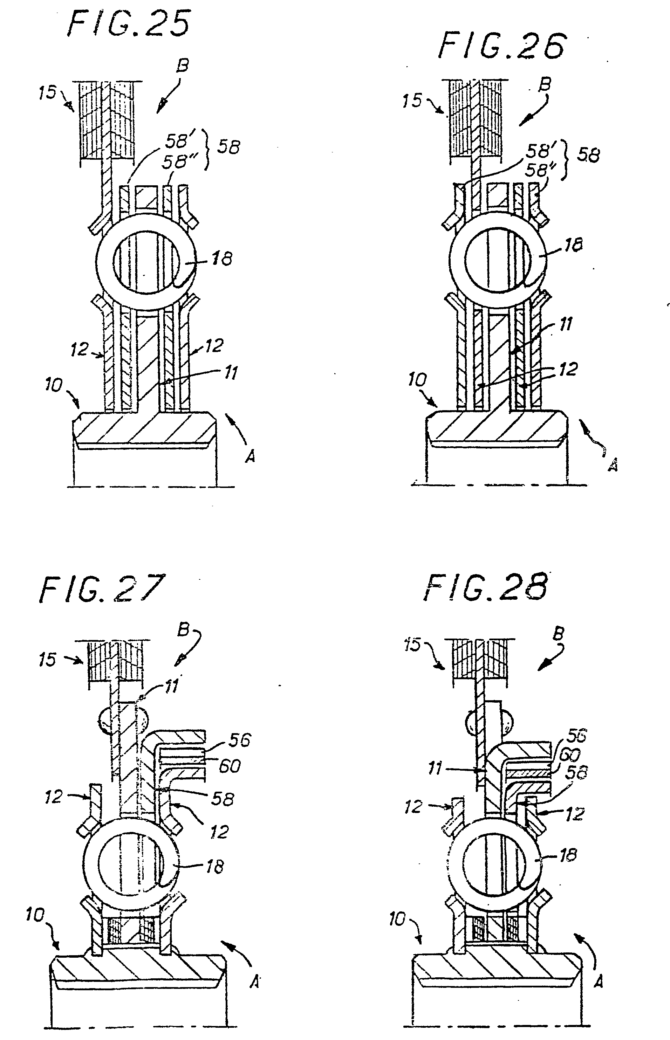

Les figures 25 à 32 illustrent schématiquement diverses variantes de réalisation et/ou d'application.

Suivant les figures 25 et 26, la plaque annulaire 58 est dédoublée en deux plaques élémentaires 58', 58", qui, à la manière des rondelles de guidage 12, sont reliées l'une à l'autre par des colonnettes axiales, non visibles sur les figures, avec l'avantage de meilleures conditions de travail pour les ressorts mis en œuvre.

Ces plaques élémentaires 58', 58" sont placées à l'intérieur du volume formé par les rondelles de guidage 12 à la figure 25, de part et d'autre du voile de moyeu 11, et à l'extérieur de ce volume à la figure 26.

Dans l'un et l'autre cas, les organes d'interposition et les organes d'appui suivant l'invention interviennent indifféremment entre elles et l'une quelconque des parties A, B de la friction concernée.

Dans ce qui précède, le voile de moyeu 11 est solidaire du moyeu 10, et le disque de friction 15 est solidaire des rondelles de guidage 12.

Dans les variantes de réalisation illustrées par les figures 27 et 28, une disposition inverse est adoptée : les rondelles de guidage 12 sont solidaires du moyeu 10, et le disque de friction 15 est porté par le voile de moyeu 11, celui-ci étant monté librement rotatif autour du moyeu 10, dans les limites d'un débattement déterminé par les organes élastiques 18 mis en œuvre.

Dans la forme de réalisation illustrée par la figure 27, les organes d'interposition et d'appui suivant l'invention, qui sont à titre d'exemple du type de ceux décrits précédemment en référence aux figures 15 à 19, interviennent entre une plaque annulaire 58 et une rondelle de guidage 12.

En variante, figure 28, ils interviennent entre une plaque annulaire 58 et le voile de moyeu 11, celui-ci ayant, par découpe et rabattement, des prolongements axiaux appropriés à la constitution d'organes d'appui du type de ceux nécessaires.

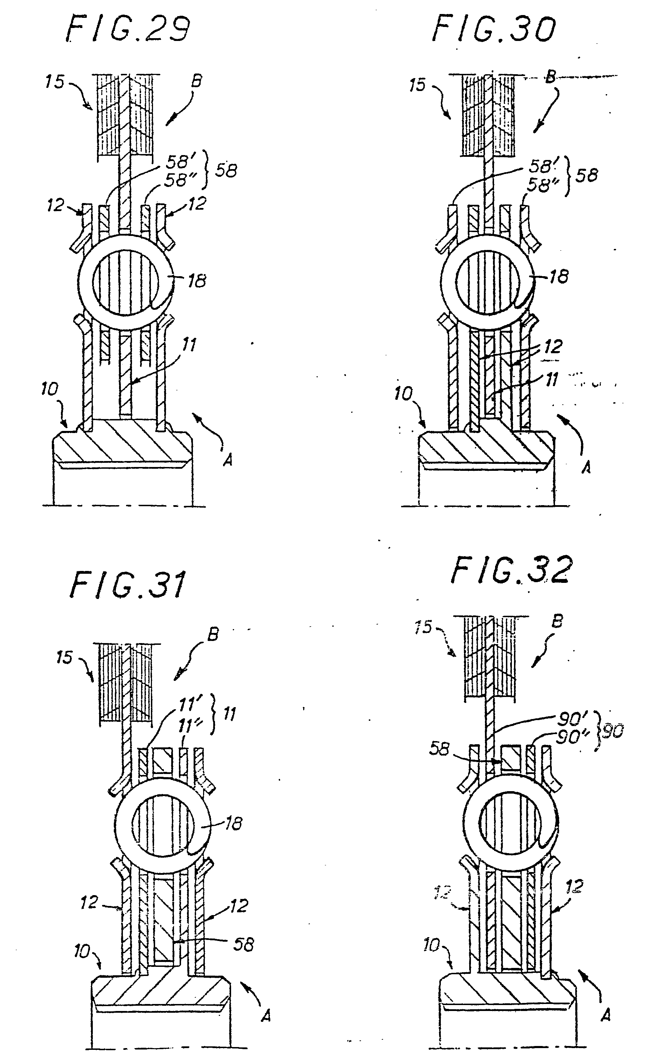

Dans les exemples d'application illustrés par les figures 29 et 30, qui concernent également le cas où les rondelles de guidage 12 sont solidaires du moyeu 10, la plaque annulaire 58 mise en œuvre est dédoublée en plaques élémentaires 58', 58", qui sont soit disposées à l'intérieur du volume formé par les rondelles de guidage 12, figure 29, soit à l'extérieur de ce volume, figure 30.

Dans les variantes d'application illustrées par les figures 31 et 32, la plaque annulaire 58 mise en œuvre occupe une position centrale, soit que, figure 31, le voile de moyeu 11 soit dédoublé en deux voiles de moyeu élémentaires 11', 11", à l'intérieur du volume formé par les rondelles de guidage 12, celles-ci portant alors le disque de friction 13, soit que, figure 32, les rondelles de guidage 12 soient solidaires du moyeu, et que le voile 90 du disque de friction 15 soit lui-même dédoublé en deux voiles élémentaires 90', 90" disposés chacun respectivement de part et d'autre de la plaque annulaire 58.

De ce qui précède, il est aisé de comprendre que l'invention est susceptible d'être mise en œuvre dans une grande diversité d'applications.

Elle ne se limite donc pas aux formes de réalisation et d'application plus particulièrement décrites et représentées.

En particulier, elle peut aussi bien s'appliquer au dispositif amortisseur de torsion comportant trois parties coaxiales montées rotatives l'une par rapport à l'autre deux à deux, tel que c'est le cas par exemple dans la friction d'embrayage décrite en détail dans FR-A-2 242 606, ainsi que dans son addition FR-A-2 270 491.

Dans une telle friction, l'organe d'interposition suivant l'invention peut intervenir entre l'une ou l'autre quelconque des diverses parties coaxiales rotatives qu'elle comporte.

En outre, au lieu d'intervenir lors du passage d'un fonctionnement en tirage à un fonctionnement en rétro, l'organe d'interposition suivant l'invention peut aussi bien intervenir lors du passage d'un fonctionnement en rétro à un fonctionnement en tirage ; s'agissant par exemple de la forme de réalisation illustrée par la figure 8, il suffit que l'implantation des pièces en cause soit symétrique de celle représentée par rapport au ressort 18B concerné.

Enfin le domaine d'application de l'invention ne se limite évidemment pas à celui des seules frictions d'embrayage pour véhicules automobiles, mais s'étend à l'ensemble de celui des dispositifs amortisseurs de torsion.

**Revendications**

1. Dispositif amortisseur de torsion, en particulier friction d'embrayage, du genre comportant au moins deux parties coaxiales (A, B) montées rotatives l'une par rapport à l'autre, dans les limites d'un débattement angulaire déterminé, et à l'encontre d'organes élastiques (18A, 18B, 18B') aptes à agir circonférentiellement entre elles pour une plage au moins dudit débattement angulaire, et au moins un organe qui est sensible à la force centrifuge, à l'encontre de moyens de rappel, et qui est ainsi mobile de manière réversible entre une position d'attente, et une position de service, afin de modifier le mode d'opération du dispositif, caractérisé en ce que ledit organe sensible à la force centrifuge constitue un organe d'interposition (26, 36, 46, 56, 76), en ce que, en position d'attente, ledit organe d'interposition (26, 36, 46, 56, 76), est sans effet, et en ce que, en position de service, au-delà d'une vitesse de rotation déterminée liée à ses moyens de rappel, prenant circonférentiellement appui soit directement, soit indirectement sur l'une quelconque desdites parties (A, B), il est apte à fournir un appui circonférentiel à l'un au moins desdits organes élastiques (18A, 18B, 18B'), en sorte que, les organes élastiques de faible raideur (18A) étant empêchés d'intervenir seuls aux faibles valeurs de couple, les caractéristiques de fonctionnement du dispositif s'en trouvent modifiées.

2. Dispositif amortisseur de torsion suivant la revendication 1, caractérisé en ce que l'organe d'interposition (26, 36, 46) est porté par l'une desdites parties (A, B), et est apte à fournir par lui-même un appui circonférentiel à l'organe élastique (18B) concerné.

3. Dispositif amortisseur de torsion suivant la revendication 2, caractérisé en ce que l'organe d'interposition (26) est monté rotatif sur l'une desdites parties (A, B), autour d'un axe (27) parallèle à l'axe de l'ensemble.

4. Dispositif amortisseur de torsion suivant la revendication 3, caractérisé en ce que l'organe d'interposition (26) comporte un bec (28) par lequel, en position de service, il est susceptible de se crocheter circonférentiellement sur l'organe élastique (18B) concerné.

5. Dispositif amortisseur de torsion suivant la revendication 3, caractérisé en ce que l'organe d'interposition (26) comporte une surface de came (32), par laquelle, en position de service, il est susceptible de fournir un appui circonférentiel à l'organe élastique (18B) concerné.

6. Dispositif amortisseur de torsion suivant la revendication 2, caractérisé en ce que l'organe d'interposition (36) est monté mobile globalement radialement sur l'une desdites parties (A, B) et présente, en positions circonférentiellement opposées, deux épaulements (37, 38), l'un pour coopération avec une butée (39) solidaire de ladite partie, l'autre pour appui circonférentiel de l'organe élastique concerné (18B).

7. Dispositif amortisseur de torsion suivant la revendication 6, caractérisé en ce que les deux épaulements (37, 38) de l'organe d'interposition (36) sont obliques l'un par rapport à l'autre.

8. Dispositif amortisseur de torsion suivant la revendication 1, dans lequel chacune desdites parties (A, B) comporte une pièce annulaire (11, 12), parallèlement l'une à l'autre, les organes élastiques (18A, 18B, 18B') prévus entre ces parties étant chacun individuellement logés pour partie dans une fenêtre (19) de la pièce annulaire (11) de l'une (A) desdites parties (A, B) et pour partie dans une fenêtre (20) de la pièce annulaire (12) de l'autre (B) desdites parties (A, B), caractérisé en ce que l'organe d'interposition (46) est formé par une portion détachée, en forme de coin, de la pièce annulaire (11) d'une (A) desdites parties, ladite portion comportant la fenêtre (19) de ladite pièce annulaire (11) dans laquelle est engagé pour partie l'organe élastique (18B) concerné et étant délimitée latéralement par des épaulements (47) obliques l'un par rapport à l'autre, pour coopération en coincement avec des épaulements complémentaires (48) prévus à cet effet sur la portion courante de ladite pièce annulaire (11).

9. Dispositif amortisseur de torsion suivant la revendication 1, caractérisé en ce qu'il est associé à l'organe d'interposition (56, 76) d'une part un organe d'appui (57, 80) qui s'étend axialement et avec lequel, en position de service, il est apte à venir en appui circonférentiel positif, et d'autre part une plaque annulaire (58), qui est engagée par des évidements (59) sur les organes élastiques (18A, 18B, 18B') prévus entre lesdites parties, sans jeu circonférentiel pour celui (18B) au moins desdits organes élastiques qui est concerné, et avec un jeu circonférentiel pour les autres (18A, 18B'), et qui forme une pièce portant l'un quelconque (56, 76, 57 ; 80) desdits organes d'interposition (56, 76) et d'appui (57 ; 80), tandis que l'autre (57, 80, 56, 76) est solidaire d'une pièce appartenant à l'une quelconque desdites parties (A, B), en sorte que c'est par l'intermédiaire de ladite plaque annulaire (58) que l'organe d'interposition (56, 76) est apte à fournir un appui circonférentiel audit organe élastique (18B) concerné.

10. Dispositif amortisseur de torsion suivant la revendication 9, caractérisé en ce que l'organe d'interposition (56) est porté par un bras (60), qui s'étend circonférentiellement, et qui, à distance de l'organe d'interposition (56), est solidaire de la pièce (11) qui le porte, ledit bras (60) constituant par lui-même les moyens de rappel dudit organe d'interposition (56).

11. Dispositif amortisseur de torsion suivant la revendication 10, caractérisé en ce que le bras (60) est formé par une lame de section relativement mince radialement et relativement allongée axialement.

12. Dispositif amortisseur de torsion suivant l'une quelconque des revendications 10, 11, caractérisé en ce que l'organe d'interposition (56) est formé par un simple repli sur lui-même du bras (60) qui le porte.

13. Dispositif amortisseur de torsion suivant l'une quelconque des revendications 10 à 12, caractérisé en ce que, pour sa solidarisation à la pièce (11) qui le porte, le bras (60) est simplement engagé par une boutonnière (62) sur une patte (63) de ladite pièce (11), qui s'étend radialement, et qui se prolonge par un talon de retenue (64), ledit talon de retenue (64) s'étendant circonférentiellement pour partie en porte-à-faux à compter de ladite patte (63) et ayant un développement circonférentiel (C1) sensiblement égal à celui de celle-ci.

14. Dispositif amortisseur de torsion suivant l'une quelconque des revendications 10 à 13, caractérisé en ce que le bras (60) portant l'organe d'interposition (56) est élastiquement déformable.

15. Dispositif amortisseur de torsion suivant la revendication 14, caractérisé en ce que, pour la configuration de repos du dispositif, le bras élastiquement déformable (60) portant l'organe d'interposition (56) est sous précontrainte élastique.

16. Dispositif amortisseur de torsion suivant l'une quelconque des revendications 10 à 15, caractérisé en ce que le bord (72) de l'organe d'appui (57) destiné à coopérer avec l'organe d'interposition (56) est biseauté.

17. Dispositif amortisseur de torsion suivant la revendication 16, caractérisé en ce que la tranche (73) correspondante de l'organe d'interposition (56) est elle-même biseautée de manière complémentaire.

18. Dispositif amortisseur de torsion suivant l'une quelconque des revendications 10 à 17, caractérisé en ce que l'organe d'appui (57) appartient à une couronne (70) qui est établie radialement au droit de l'organe d'interposition (56), au-delà de celui-ci et qui présente au moins une échancrure (71) propre à l'engagement dudit organe d'interposition (56).

19. Dispositif amortisseur de torsion suivant la revendication 18, caractérisé en ce que, entre ladite couronne (70) et le bras (60) portant l'organe d'interposition (56) intervient un frottement.

20. Dispositif amortisseur de torsion suivant l'une quelconque des revendications 1 à 19, caractérisé en ce que, entre ladite couronne (70) et l'organe d'interposition (56), intervient un frottement.

21. Dispositif amortisseur de torsion suivant la revendication 9, caractérisé en ce que l'organe d'interposition (76) est en prise avec un guide (78), et l'organe d'appui (80) qui lui est associé interfère avec le trajet de l'organe d'interposition (76) le long de son guide (78).

22. Dispositif amortisseur de torsion suivant la revendication 21, caractérisé en ce que l'organe d'interposition (76) est constitué par une simple plaquette, et son guide (78) est constitué par un évidement allongé radialement, qui est formé dans un flasque (77), et dans lequel ledit organe d'interposition (76) est monté coulissant.

23. Dispositif amortisseur de torsion suivant la revendication 22, caractérisé en ce que ledit flasque (77) présente, à l'extrémité de l'évidement (78) formant le guide de l'organe d'interposition (76), un bec de retenue (79) qui fait saillie dans ledit évidement (78), et, au-delà d'un épaulement (82) propre à coopérer radialement en butée contre ledit bec de retenue (79), ledit organe d'interposition (76) comporte un prolongement radial (83) sur lequel est susceptible de venir porter l'organe d'appui (80).

24. Dispositif amortisseur de torsion suivant l'une quelconque des revendications 21 à 23, caractérisé en ce que le guide (78) avec lequel est en prise l'organe d'interposition appartient à l'une quelconque desdites parties (A, B) et l'organe d'appui (80) est porté par la plaque annulaire (58) associée.

25. Dispositif amortisseur de torsion suivant l'une quelconque des revendications 1 à 24, caractérisé en ce qu'au moins deux organes d'interposition (26, 36, 46, 56, 76) sont prévus en positions diamétralement opposées.

26. Dispositif amortisseur de torsion, suivant les revendications 24 et 25, prises conjointement, caractérisé en ce que lesdits organes d'interposition (76) ont en commun leurs moyens de rappel, lesdits moyens de rappel étant constitués par un ressort de torsion (86), et les deux branches (87) de celui-ci étant chacune respectivement attelées aux deux organes d'interposition (76).

27. Dispositif amortisseur de torsion suivant les revendications 1 à 24, caractérisé en ce que le nombre d'organes élastiques (18A, 18B, 18B') concernés par l'intervention d'un ou plusieurs organes d'interposition (26, 36, 46, 56, 76) est tel qu'il en résulte une composante radiale sur l'axe de l'ensemble.

28. Dispositif amortisseur de torsion suivant les revendications 1 à 24, caractérisé en ce que tous les organes élastiques (18B, 18B') sont concernés par l'intervention d'un ou plusieurs organes d'interposition (26, 36, 46, 56, 76).

29. Dispositif amortisseur de torsion, en particulier friction d'embrayage, du genre comportant au moins deux parties coaxiales montées rotatives l'une par rapport à l'autre, dans les limites d'un débattement angulaire déterminé, et à l'encontre d'organes élastiques aptes à agir circonférentiellement entre elles pour une plage au moins dudit débattement angulaire, chacune desdites parties comportant une pièce annulaire, parallèlement l'une à l'autre, et lesdits organes élastiques étant chacun individuellement logés pour partie dans une fenêtre de la pièce annulaire de l'une desdites parties et pour partie dans une fenêtre de la pièce annulaire de l'autre desdites parties, caractérisé en ce qu'il comporte au moins un organe, dit ci-après par commodité organe d'interposition, qui est sensible à la force centrifuge, à l'encontre de moyens de rappel, et qui est ainsi mobile de manière réversible entre une position d'attente, pour laquelle il est sans effet, et, au-delà d'une vitesse de rotation déterminée liée à ses moyens de rappel, une position de service pour laquelle, pour l'un au moins desdits organes élastiques, il se substitue, soit directement, soit indirectement, à l'un des bords radiaux d'une des fenêtres dans lesquelles est logé ledit organe élastique.

**Claims**

1. Torsion damper device, in particular a clutch friction member, of the kind comprising at least two coaxial parts (A, B) rotatably mounted one relating to the other within the limits of predetermined angular clearance and against elastic members (18A, 18B, 18B') adapted to act circumferentially therebetween for at least one range of the said angular clearance and at least one member which is sensitive to centrifugal force, against return means, and which is thus reversibly movable between a standby position and an operative position in order to modify the operation of the device, characterised in that the said member sensitive to centrifugal force comprises an interposition member (26, 36, 46, 56, 76), in that, in the standby position the said interposition member (26, 36, 46, 56, 76) is inoperative, and in that in the operative position, above a predetermined rotational speed associated with its return means, bearing circumferentially, either directly or indirectly, against either one of the said parts (A, B), it is adapted to provide a circumferential support for at least one of the said elastic members (18A, 18B, 18B'), so that since the elastic members (18A) of low stiffness are prevented from intervening alone at low values of torque, the operating characteristics of the device is modified.

2. Torsion damper device according to claim 1, characterised in that the interposition member (26, 36, 46) is carried by one of the said parts (A, B) and is adapted to provide in itself a circumferential support for the elastic member (18B) concerned.

3. Torsion damper device according to claim 2, characterised in that the interposition member (26) is rotatably mounted on one of the said parts (A, B) about an axis (27) parallel to the axis of the assembly.

4. Torsion damper device according to claim 3, characterised in that the interposition member (26) comprises a nose (28) by which, in the operative position, it is capable of circumferentially hooking upon the elastic member (18B) concerned.

5. Torsion damper device according to claim 3, characterised in that the interposition member (26) comprises a cam surface (32) by which, in the operative position, it is capable of providing a circumferential support for the elastic member (18B) concerned.

6. Torsion damper device according to claim 2, characterised in that the interposition member (36) is generally radially movably mounted on one of the said parts (A, B) and has, at circumferentially opposite positions, two shoulders (37, 38), the former for cooperation with an abutment (39) fast with the said part, the other for circumferential support of the elastic member (18B) concerned.

7. Torsion damper device according to claim 6, characterised in that the two shoulders (37, 38) of the interposition member (36) are oblique relative to each other.

8. Torsion damper device according to claim 1, wherein each of the said parts (A, B) comprises an annular component (11, 12), parallel to each other, the elastic members (18A, 18B, 18B') provided between said parts each being individually housed partly in a window (19) of the annular component (11) of one (A) of the said parts (A, B) and partly in a window (20) of the annular component (12) of the other (B) of the said parts (A, B), characterised in that the interposition member (46) is formed by a detached wedge-shaped portion of the annular component (11) of the one (A) of the said parts, the said portion comprising the window (19) of the said annular component (11) in which the elastic member (18B) concerned is partly engaged and being bounded laterally by shoulders (47) oblique with respect to each other for wedging cooperation with complementary shoulders (48) provided for that purpose on the running portion of the said annular part (11).

9. Torsion damper device according to claim 1, characterised in that there are associated with the interposition member (56, 76), on the one hand a support member (57, 80) which extends axially and with which it is adapted to come into positive circumferential abutment in the operative position, and on the other. hand, annular plate (58) which is engaged by recesses (59) on the elastic members (18A, 18B, 18B') provided between the said parts, without circumferential clearance for at least that one (18B) of said elastic members which is concerned, and with circumferential clearance for the others (18A, 18B'), and which forms a comment carrying any one (56, 76, 57, 80) of the said interposition (56, 76) and support (57, 80) members, whereas the other (57, 80, 56, 76) is fast with a component belonging to either of said parts (A, B), so that it is through the intermediary of the said annular plate (58) that the interposition member (56, 76) is capable of providing a circumferential support for the said elastic element (18B) concerned.

10. Torsion damper device according to claim 9, characterised in that the interposition member (56) is carried by an arm (60) which extends circumferentially and which, at a distance from the interposition member (56) is fast with the component (11) which carries it, the said arm (60) constituting in itself the return means of the said interposition member (56).

11. Torsion damper device according to claim 10, characterised in that the arm (60) is constituted by a plate of radially relatively thin section and axially relatively elongate section.

12. Torsion damper device according to either of claims 10, 11, characterised in that the interposition member (56) is constituted by a simple return bend on the arm (60) which carries it.

13. Torsion damper device according to any one of claims 10 to 12, characterised in that, for its securement to the component (11) which carries it, the arm (60) is simply engaged by a slot (62) in a lug (63) of the said component (11) which extends radially and which is extending by a retaining heel (64), said retaining heel (64) extending circumferentially partly cantilevered from the said lug (63) and having a circumferential extent (C1) substantially equal to that of the latter.

14. Torsion damper device according to any one of claims 10-13, characterised in that the arm (60) carrying the interposition member (56) is elastically deformable.

15. Torsion damper device according to claims 14, characterised in that, in the rest configuration of the device, the elastically deformable arm (60) carrying the interposition element (56) is elastically preloaded.

16. Torsion damper device according to any one of claims 10 to 15, characterised in that the edge (72) of the support member (57) intended to cooperate with the interposition member (56) is bevelled.

17. Torsion damper device according to claim 16, characterised in that the corresponding edge (73) of the interposition member (56) is itself bevelled in complementary manner.

18. Torsion damper device according to any one of claims 10 to 17, characterised in that the support member (57) belongs to a ring (70) which is arranged radially in line with the interposition member (56), beyond the latter, and which has at least one notch (71) adapted for the engagement of the said interposition member (56).

19. Torsion damper device according to claim 18, characterised in that a friction occurs between the said ring (70) and the arm (60) carrying the interposition member (56).

20. Torsion damper device according to any one of claims 1 to 19, characterised in that a friction occurs between the said ring (70) and the interposition member (56).

21. Torsion damper device according to claim 9, characterised in that the interposition member (76) is in engagement with a guide (78), and the support member (80) which is associated therewith intersects the path of the interposition member (76) along its guide (78).

22. Torsion damper device according to claim 21, characterised in that the interposition member (76) is constituted by a simple plate, and its guide (78) is constituted by a radially elongate cutout which is formed in a flange (77) and in which said interposition member (76) is slidingly mounted.

23. Torsion damper device according to claim 22, characterised in that the said flange (77) has, at the end of the recess (78) constituting the guide for the interposition member (76), a retaining nose (79) which projects into the said cutout (78) and, beyond a shoulder (82) adapted to cooperate radially in abutment against the said retaining nose (79), the said interposition member (76) comprises a radial extension (83) against which the support member (80) is capable of bearing.

24. Torsion damper device according to any one of claims 21 to 23, characterised in that the guide (78) with which the interposition member is in engagement belongs to either of the said parts (A, B) and the support member (80) is carried by the associated annular plate (58).

25. Torsion damper device according to any one of claims 1 to 24, characterised in that at least two interposition members (26, 36, 46, 56, 76) are provided in diametrally opposite positions.

26. Torsion damper device according to claims 24 and 25 taken conjointly, characterised in that said interposition members (76) have common return means, the said return means being constituted by a torsion spring (86), and the two branches (87) thereof each being respectively attached to both interposition members (76).

27. Torsion damper device according to claims 1 to 24, characterised in that the number of elastic members (18A, 18B, 18B') affected by the action of one or more interposition members (26, 36, 46, 56, 76) is such that it results in a radial component along the axis of the assembly.

28. Torsion damper device according to claims 1 to 24, characterised in that all the elastic members (18B, 18B') are affected by the action of one or more interposition members (26, 36, 46, 56, 76).

29. Torsion damper device, in particular a clutch friction member, of the kind comprising at least two coaxial parts rotatably mounted one relative to the other within the limits of predetermined angular clearance and against elastic members adapted to act circumferentially therebetween for at least one range of the said angular clearance, each of the said parts comprising an annular component, parallel to each other, and the said elastic members each being individually housed partly in a window of the annular component of the one of the said parts and partly in a window of the annular component of the other of the said parts, characterised in that it comprises at least one element, hereinafter called for convenience and interposition member, which is sensitive to centrifugal force, against return means, and which is thus reversibly movable between a standby position for which it is inoperative and, beyond a predetermined rotational speed associated with its return means, and operative position for which, for at least one of the said elastic member, it is substituted, either directly or indirectly, for one of the radial edges of one of the windows in which one said elastic member is housed.

Ansprüche

1. Vorrichtung zur Dämpfung von Drehschwingungen, insbesondere Kupplungsscheibe für Kraftfahrzeuge, mit mindestens zwei koaxial angeordneten Teilen (A, B), die in den Grenzen eines vorbestimmten Winkelfederwegs gegen in Umfangsrichtung zwischen ihnen zumindest über einen Bereich dieses Winkelfederwegs wirksamen Federorganen gegeneinander verdrehbar sind, und mit mindestens einem gegen Rückstellmittel auf die Zentrifugalkraft ansprechenden Organ, welches auf diese Weise zwischen einer Wartestellung und einer Betriebsstellung reversibel bewegbar ist, um die Operationsart der Vorrichtung zu verändern, dadurch gekennzeichnet, daß das auf die Zentrifugalkraft ansprechende Organ als ein Zwischenorgan (26, 36, 46, 56, 76) in der Wartestellung ohne Einwirkung ist und in der Betriebsstellung oberhalb einer vorbestimmten an seine Rückstellmittel gebundene Drehzahl und sei es direkt, sei es indirekt in Umfangsrichtung an einem beliebigen der beiden Teile (A, B) zur Anlage kommt, und dabei in Umfangsrichtung einen Anschlag für zumindest eines der Federorgane (18A, 18B, 18B') derart bildet, daß die Betriebscharakteristika der Vorrichtung verändert sind, wobei allein die Federorgane mit geringer federkraft (18A) daran gehindert sind, bei geringen Werten des Moments einzuwirken.

2. Vorrichtung nach Anspruch 1, dadurch gekennzeichnet, daß das Zwischenorgan (26, 36, 46) von einem der genannten Teile (A, B) getragen wird und selber in Umfangsrichtung einen Anschlag für das betreffende Federorgan (18B) bildet.

3. Vorrichtung nach Anspruch 2, dadurch gekennzeichnet, daß das Zwischenorgan (26) auf einem der Teile (A, B) um eine zur Achse der Vorrichtung parallele Achse (27) drehbar angeordnet ist.

4. Vorrichtung nach Anspruch 3, dadurch gekennzeichnet, daß das Zwischenorgan (26) eine Nase (28) aufweist, mittels welcher es sich in der Arbeitsstellung in Umfangsrichtung am zugeordneten elastischen Organ (18B) verhakt.

5. Vorrichtung nach Anspruch 3, dadurch gekennzeichnet, daß das Zwischenorgan (26) eine Nockenfläche (32) aufweist, mittels welcher es in der Arbeitsstellung in Umfangsrichtung einen Anschlag für das zugeordnete Federorgan (18B) liefert.

6. Vorrichtung nach Anspruch 2, dadurch gekennzeichnet, daß das Zwischenorgan, (36) an einem der Teile (A, B) im wesentlichen radial bewegbar angeordnet ist und in Umfangsrichtung einander entgegengesetzte Schultern (37, 38) aufweist, die eine für das Zusammenwirken mit einem an dem genannten Teil befestigten Anschlag (39), die andere für die Anlage des betreffenden Federorgans (18B) in Umfangsrichtung.

7. Vorrichtung nach Anspruch 6, dadurch gekennzeichnet, daß die beiden Schultern (37, 38) des Zwischenorgans (36) gegeneinander geneigt sind.

8. Vorrichtung nach Anspruch 1, bei dem jedes der genannten Teile (A, B) ein ringförmiges Teil (11, 12) aufweist, welche parallel zueinander verlaufen, wobei die zwischen beiden Teilen vorgesehenen Federorgane (18A, 18B, 18B') jeweils einzeln zum Teil in einem Fenster (19) des ringförmigen Teils (11) des einen (A) der genannten Teile (A, B) eingesetzt sind, dadurch gekennzeichnet, daß das Zwischenorgan (46) als ein keilförmig ausgeschnittener Abschnitt des Ringteils (11) des einen (A) der Teile (A, B) ausgebildet ist, wobei der genannte Bereich ein Fenster (19) des genannten ringförmigen Teils (11) enthält, in welchem Fenster teilweise das betreffende Federorgan (18B) eingesetzt ist, und welcher Bereich seitlich durch gegeneinander geneigte Schultern (47) begrenzt ist, um durch Klemmen mit komplementären Schultern (48) zusammenzuwirken, die zu diesem Zweck an dem laufenden Bereich des ringförmigen Teils (11) vorgesehen sind.

9. Vorrichtung nach Anspruch 1, dadurch gekennzeichnet, daß dem Zwischenorgan (56, 76) einerseits ein sich axial erstreckendes Anlageglied (57, 80) mit welchem es in Arbeitsstellung in Umfangsrichtung formschlüssig zur Anlage kommt, und andererseits eine Ringplatte (58) zugeordnet ist, welche über Aussparungen (59) mit den elastischen Organen (18A, 18B, 18B'), die zwischen den Teilen vorgesehen sind, in Eingriff steht, ohne Spiel in Umfangsrichtung für zumindest das betreffende (18B) der genannten Federorgane, und mit Spiel in Umfangsrichtung für die anderen (18A, 18B'), und welches ein Teil bildet, das irgendeins (56, 76, 57, 80) der genannten Zwischenorgane (56, 76) und Anschlagorgane (57, 80) trägt, während das andere (57, 80, 56, 76) fest mit einem Teil verbunden ist, das zu einem beliebigen der beiden Teile (A, B) angehört, und zwar derart, daß das Zwischenorgan (56, 76) unter Zwischenschaltung des Ringteils (58) eine Anlage in Umfangsrichtung für das betreffende Federorgan (18B) liefert.

10. Vorrichtung nach Anspruch 9, dadurch gekennzeichnet, daß das Zwischenorgan (56) von einem sich in Umfangsrichtung erstreckenden Arm (60) getragen ist, welcher mit Abstand vom Zwischenorgan (56) mit dem Stück (11), das ihn trägt, fest verbunden ist, wobei der Arm (60) selbst die Rückholeinrichtung des Zwischenorgans (56) bildet.

11. Vorrichtung nach Anspruch 10, dadurch gekennzeichnet, daß der Arm (60) durch einen Streifen mit radial dünnem und axial relativ langem Querschnitt gebildet ist.

12. Vorrichtung nach einem der Ansprüche 10 oder 11, dadurch gekennzeichnet, daß das Zwischenorgan (56) durch einen einfachen Umschlag des es tragenden elastischen verformbaren Arms (60) gebildet ist.

13. Vorrichtung nach einem der Ansprüche 10 bis 12, dadurch gekennzeichnet, daß zum Festlegen an dem ihn tragenden Stück (11) der Arm (60) mit einem Langloch (62) auf einer Klaue (63) des sich radial erstreckenden und um ein Hakenstück (64) verlängerten Stücks in einfachem Eingriff ist, wobei sich das Hakenstück von der Klaue an teilweise vorspringend in Umfangsrichtung erstreckt und ein Bogenmaß in Umfangsrichtung (C1) aufweist, das im wesentlichen gleich demjenigen jener ist.

14. Vorrichtung nach einem der Ansprüche 10 bis 13, dadurch gekennzeichnet, daß der Arm, welcher das Zwischenorgan (56) trägt, federnd verformbar ist.

15. Vorrichtung nach Anspruch 14, dadurch gekennzeichnet, daß für die Ruhestellung der Vorrichtung der das Zwischenorgan (56) tragende elastisch verformbare Arm (60) unter federnder Vorspannung steht.

16. Vorrichtung nach einem der Ansprüche 10 bis 15, dadurch gekennzeichnet, daß der mit dem Zwischenorgan (56) zusammenwirkende Rand (72) des Anlageglieds (57) abgeschrägt ist.

17. Vorrichtung nach Anspruch 16, dadurch gekennzeichnet, daß die entsprechende Schnittfläche (73) des Zwischenorgans (56) selbst in entsprechender Weise abgeschrägt ist.

18. Vorrichtung nach einem der Ansprüche 10 bis 17, dadurch gekennzeichnet, daß das Anlageglied (57) einer Ringscheibe (70) zugeordnet, ist, die radial gegenüber dem Zwischenorgan (56) jenseits von diesem vorgesehen ist, und die mindestens eine Einkerbung (71) aufweist, welche für den Eingriff des Zwischenorgans (56) geeignet ist.

19. Vorrichtung nach Anspruch 16, dadurch gekennzeichnet, daß zwischen der Ringscheibe (70) und dem das Zwischenorgan (56) tragenden Arm (60) eine Reibvorrichtung vorgesehen ist.

20. Vorrichtung nach einem der Ansprüche 1 bis 19, dadurch gekennzeichnet, daß eine Reibvorrichtung zwischen der Ringscheibe (70) und dem Zwischenorgan (56) vorgesehen ist.

21. Vorrichtung nach Anspruch 9, dadurch gekennzeichnet, daß das Zwischenorgan (76) mit einer Führung (78) in Eingriff ist und daß ihm das zugeordnete Anlageglied (80) in den Bewegungsweg des Zwischenorgans (76) längs seiner Führung (78) eingreift.

22. Vorrichtung nach Anspruch 21, dadurch gekennzeichnet, daß das Zwischenorgan (76) durch ein einfaches Plättchen gebildet ist und daß dessen Führung (78) als eine sich radial erstreckende längliche in einem Flansch ausgeformte Aussparung (77) gebildet ist, in welcher das Zwischenorgan (76) verschiebbar angeordnet ist.

23. Vorrichtung nach Anspruch 22, dadurch gekennzeichnet, daß der Flansch (77) am Ende der die Führung des Zwischenorgans (76) bildenden Aussparung (78) eine Rückhaltenase (79) aufweist, welche in die Aussparung (78) hineinragt, wobei jenseits einer Schulter (82) zur radialen Zusammenwirkung durch Anschlag an der Rückhaltenase (79) das Zwischenorgan (76) eine radiale Verlängerung (83) aufweist, an welcher das Anlageglied (80) zur Anlage kommt.

24. Vorrichtung nach einem der Ansprüche 21-23, dadurch gekennzeichnet, daß die Führung (78), mit welcher das Zwischenorgan in Eingriff steht, an einem der Teile (A, B) vorgesehen ist, während das Anlageglied (80) von der zugeordneten Ringplatte (58) getragen wird.

25. Vorrichtung nach einem der Ansprüche 1-24, dadurch gekennzeichnet, daß zumindest zwei Zwischenorgane (26, 36, 46, 56, 76) in sich diametral gegenüberliegenden Halterungen vorgesehen sind.

26. Vorrichtung nach Ansprüche 24 und 25 gemeinsam, dadurch gekennzeichnet, daß die Zwischenorgane (76) gemeinsame Rückstellmittel haben, wobei die Rückstellmittel durch eine Torsionsfeder (86) gebildet werden, deren beide Zweige (82) jeweils an einem der beiden Zwischenorgane (76) befestigt sind.

27. Vorrichtung nach einem der Ansprüche 1-24, dadurch gekennzeichnet, daß die Anzahl der elastischen Organe (18A, 18B, 18B'), die von der Einwirkung von einem oder mehreren Zwischenorganen (26, 36, 56, 76) betroffen sind, derart ist, daß sich eine radiale Komponente zur Achse der Vorrichtung ergibt.

28. Vorrichtung nach einem der Ansprüche 1-24, dadurch gekennzeichnet, daß alle elastischen Organe (18A, 18B') durch die Einwirkung einer oder mehrerer Zwischenorgane (26, 36, 46, 56, 76) betroffen sind.

29. Vorrichtung zur Dämpfung von Drehschwingungen, insbesondere Reibungskupplung, mit zumindest zwei koaxial angeordneten Teilen, die in den Grenzen eines vorbestimmten Winkelfederwegs und gegen zwischen ihnen zumindest über einen Bereich des Winkelfederwegs wirkenden Federorganen gegeneinander verdrehbar sind, wobei die genannten Teile jeweils ein ringförmiges Teil aufweisen, die unter einander parallel verlaufen, und wobei die Federorgane jeweils zum Teil in einem Fenster des ringförmigen Teils des einen der genannten Teile und zum Teil in einem fenster in dem ringförmigen Teil des anderen der oben genannten Teile eingesetzt ist, dadurch gekennzeichnet, daß mindestens ein Organ, kurz Zwischenorgan (26, 36, 46, 56, 76) genannt, vorgesehen ist, das gegen Rückstellmittel auf die Zentrifugalkraft anspricht und auf diese Weise reversibel bewegbar ist zwischen einer Wartestellung, in der es ohne Wirkungen ist und, jenseits einer an seine Rückstellmittel gebundenen vorbestimmten Drehzahl, einer Betriebsstellung, in welcher es sich zumindest für eine der genannten Federorgane, sei es direkt, sei es indirekt, an die Stelle eines der radialen Ränder eines der Fenster setzt, in denen das Federorgan aufgenommen ist.

FIG.1

# F I G. 2

# F I G. 3

# F I G. 4

# F I G. 5

# FIG.6

# FIG.7

# FIG.8

# FIG.9

# FIG.10

# FIG.11

0 015 204

FIG.12

FIG.13

FIG.14

FIG.16

4

# FIG. 15

## FIG. 17

## FIG. 18

## FIG. 19

0 015 204

FIG. 22

FIG. 20

FIG.23

7

FIG. 21

FIG. 24

# FIG.25

# FIG.26

# FIG.27

# FIG.28

## FIG.29

## FIG.30

## FIG.31

## FIG.32